(19) Europäisches Patentamt
European Patent Office
Office européen des brevets

(11) EP 2 819 281 A2

(12) **EUROPEAN PATENT APPLICATION**

(43) Date of publication:
**31.12.2014 Bulletin 2015/01**

(21) Application number: **13194411.8**

(22) Date of filing: **26.11.2013**

(51) Int Cl.:
***H02K 21/16*** *(2006.01)* ***H02K 1/27*** *(2006.01)*
***H02P 6/18*** *(2006.01)* ***H02P 21/14*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.06.2013 JP 2013135159**

(71) Applicant: **Kabushiki Kaisha Yaskawa Denki**
**Kitakyushu-shi, Fukuoka 806-0004 (JP)**

(72) Inventors:
- **NAKAZONO, Kensuke**
  **Kitakyushu-shi, Fukuoka 806-0004 (JP)**
- **KAKIHARA, Masanobu**
  **Kitakyushu-shi, Fukuoka 806-0004 (JP)**
- **KOJIMA, Jun**
  **Kitakyushu-shi, Fukuoka 806-0004 (JP)**
- **KAMEI, Yoshiaki**
  **Kitakyushu-shi, Fukuoka 806-0004 (JP)**

(74) Representative: **Viering, Jentschura & Partner**
**Patent- und Rechtsanwälte**
**Grillparzerstrasse 14**
**81675 München (DE)**

(54) **Rotating electric machine and controller of the electric machine**

(57) The rotating electric machine (1) includes a stator (2) and a rotor (3). The rotating electric machine (1) includes a rotor iron core (20) including a plurality of magnetic pole portions (20B) in a circumferential direction, a plurality of permanent magnets (21) provided on the rotor iron core (20), and a stator iron core (5) including a plurality of teeth (18) around each of which coil winding (7) is wound. The stator iron core (5; 105) is configured in such a manner that the tooth (18: 118) facing the magnetic pole portion (20B) in the radial direction is substantially magnetically saturated by the permanent magnet (21) in a non-energized state of the stator winding (7).

[FIG. 5]

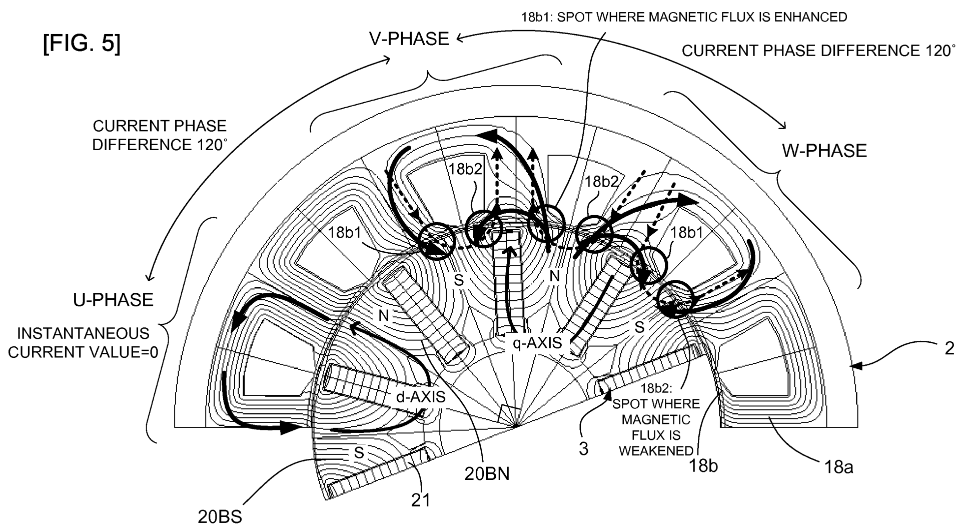


EP 2 819 281 A2

Printed by Jouve, 75001 PARIS (FR)

## Description

TECHNICAL FIELD

A disclosed embodiment relates to a rotating electric machine and a controller of a rotating electric machine.

BACKGROUND ART

JP, A, 2010-172080 describes a controller of an AC motor configured to execute torque control, speed control and position control of an AC motor without using positional sensor and speed sensor.

DISCLOSURE OF THE INVENTION

Problem to be solved by the Invention

A controller of the prior-art technology applies a high-frequency voltage signal to an AC motor and estimates a rotation angle of the motor by using a change in inductance at that time. In this case, it is necessary to ensure a large salient pole ratio of the motor in order to estimate the rotation angle with accuracy. However, if a load torque of the motor increases, magnetic saturation of a rotor core progresses, and thus it is likely that the salient pole ratio lowers and estimation accuracy deteriorates. On the other hand, if the size of the rotor is increased in order to avoid magnetic saturation of the rotor core at a high load, the physical size of the motor is increased.

The present disclosure was made in view of the problems and has an object to provide a rotating electric machine and a controller of a rotating electric machine which can ensure a salient pole ratio even at a high load without increasing the physical size.

Means for Solving the Problem

According to one aspect of the disclosure, there is provided a rotating electric machine including a stator and a rotor. The rotating electric machine includes a rotor iron core including a plurality of magnetic pole portions in a circumferential direction, a plurality of permanent magnets provided on the rotor iron core, and a stator iron core including a plurality of teeth around each of which coil winding is wound. The stator iron core is configured in such a manner that the tooth facing the magnetic pole portion in the radial direction is substantially magnetically saturated by the permanent magnet in a non-energized state of the stator winding.

According to another aspect of the disclosure, there is provided a controller of a rotating electric machine configured to executes, without using positional sensor and speed sensor, at least any one of torque control, speed control, and position control of the rotating electric machine. The rotating electric machine includes a stator and a rotor. A rotor iron core includes a plurality of magnetic pole portions in a circumferential direction, a plurality of permanent magnets provided on the rotor iron core, and a stator iron core including a plurality of teeth around each of which a stator winding is wound. When an axis extending in a center direction of the magnetic pole portion from a rotation axis is d-axis and an axis extending in a direction shifted by 90 degrees from the center direction in an electric angle is q-axis, the controller is configured to supply a high-frequency voltage signal to at least either one of the d-axis and the q-axis, and to supply a positive current to the d-axis in such a manner that the tooth facing the magnetic pole portion in the radial direction is substantially magnetically saturated, and to supply a load current to the q-axis.

Advantages of the Invention

According to the present disclosure, the salient pole ratio can be ensured even at a high load without increasing the physical size.

BRIEF DESCRIPTION OF THE DRAWINGS

FIG. 1 is an axial sectional view illustrating a general outline configuration of a rotating electric machine of an embodiment.

FIG. 2 is a cross sectional view of the rotating electric machine of the present embodiment.

FIG. 3 is a control block diagram illustrating a configuration of a rotating electric machine controller executing sensorless control.

FIG. 4 is a diagram for explaining the respective magnetic pole positions of a stator and a rotor in a section orthogonal to the axial direction.

FIG. 5 is a diagram illustrating generation distribution of the respective magnetic fluxes of the stator and the rotor in the section orthogonal to the axial direction.

FIG. 6 is a graph illustrating a B-H curve of a general electromagnetic steel plate.

FIG. 7A is a diagram illustrating magnetic flux distribution of the embodiment in a no-load state.

FIG. 7B is a diagram illustrating magnetic flux distribution of a comparative example in a no-load state.

FIG. 8A is a diagram illustrating magnetic flux distribution of the embodiment in a 50% load current state.

FIG. 8B is a diagram illustrating magnetic flux distribution of the comparative example in a 50% load current state.

FIG. 9A is a diagram illustrating magnetic flux distribution of the embodiment in a 100% load current state.

FIG. 9B is a diagram illustrating magnetic flux distribution of the comparative example in a 100% load current state.

FIG. 10A is a diagram illustrating magnetic flux distribution of the embodiment in a 150% load current state.

FIG. 10B is a diagram illustrating magnetic flux distribution of the comparative example in a 150% load current state.

FIG. 11A is a diagram illustrating magnetic flux distribution of the embodiment in a 200% load current state.

FIG. 11B is a diagram illustrating magnetic flux distribution of the comparative example in a 200% load current state.

FIG. 12 is a graph illustrating an actual measurement result of high-frequency inductance when a search signal is superposed and inputted in the embodiment.

FIG. 13 is a graph illustrating an actual measurement result of high-frequency inductance when a search signal is superposed and inputted in the comparative example.

FIG. 14 is a cross sectional view of a variation in which a stator iron core is composed of a split core internally connected.

BEST MODE FOR CARRYING OUT THE INVENTION

An embodiment will be described below by referring to the attached drawings.

<Configuration of rotating electric machine>

First, by using FIGS. 1 and 2, a configuration of a rotating electric machine 1 according to the present embodiment will be described. As illustrated in FIG. 1, the rotating electric machine 1 is an inner-rotor type motor provided with a stator 2 and a rotor 3, in which the rotor 3 is provided inside the stator 2. The rotating electric machine 1 is a three-phase AC motor for so-called sensorless control (sensorless control will be described in detail later in FIG. 3) for detecting and controlling a magnetic pole position by electric processing without using a mechanical sensor such as an encoder. The stator 2 is provided on an inner peripheral surface of a frame 4 through an annular laminated iron-core ring 30 so as to face the rotor 3 in a radial direction. This stator 2 has a stator iron core 5, a bobbin 6 attached to the stator iron core 5, and a coil winding 7 (corresponding to a stator winding) wound around the bobbin 6. The bobbin 6 is formed of an insulating material in order to electrically insulate the stator iron core 5 and the coil winding 7. A substrate 8 is provided on one side in an axial direction (left side in FIG. 1) of the bobbin 6, and a circuit provided on this substrate 8 and the coil winding 7 wound around the bobbin 6 are electrically connected through two square-bar shaped pin terminals 9. End portions 7a which are winding start and winding end of the coil winding 7 are wound around the corresponding pin terminals 9 and fixed by solder or the like, not shown.

The rotor 3 is provided on an outer peripheral surface of a shaft 10. The shaft 10 is rotatably supported by a load-side bearing 12 in which an outer ring is fitted in a load-side bracket 11 provided on the load side (right side in FIG. 1) of the frame 4 and an opposite-load side bearing 14 in which an outer ring is fitted in an opposite-load side bracket 13 provided on the opposite-load side (the side opposite to the load side. The left side in FIG. 1) of the frame 4. Moreover, the rotor 3 is provided with a rotor iron core 20 and a plurality of permanent magnets 21 provided on the rotor iron core 20 and arranged radially around the shaft 10.

The stator iron core 5 is provided with a cylindrical yoke 15 and a plurality of (12 pieces in the illustrated example) teeth 18 arranged on the inner peripheral side of this yoke 15 at equal intervals. To each of the teeth 18, the bobbin 6 around which the coil winding 7 is wound in a concentrated winding method is attached. As illustrated in FIG. 2, winding layers of the coil windings 7 of the bobbins 6 attached to the respective teeth 18 are arranged while side portions face each other with a gap 19. After the bobbin 6 around which the coil winding 7 is wound is attached to the stator iron core 5, the stator 2 is assembled by being fixed to an inner periphery of an annular laminated iron-core ring 30 and attached to the inner peripheral surface of the frame 4. Subsequently, a resin is pressed into the gap 19, and the bobbin 6, the coil winding 7 and the like are molded by the resin. Moreover, each of the teeth 18 has a body portion 18a projecting from the cylindrical yoke 15 toward the inner peripheral side and a widened portion 18b located on a distal end on the inner peripheral side of the body portion 18a and having its width in a circumferential direction expanded. The adjacent widened portions 18b are separated from each other without contact between the distal ends in the circumferential direction. Moreover, the entire stator iron core 5 is made of so-called electromagnetic steel plate in this example.

<Configuration of rotor iron core>

The rotor iron core 20 has, as illustrated in FIG. 2, a cylindrical portion 20A surrounding the shaft 10, a plurality of (10 pieces in the illustrated example) magnetic pole portions 20B provided outside in the radial direction of the cylindrical portion 20A, a permanent magnet insertion hole 20b, and a leakage flux prevention hole 20d. The cylindrical portion 20A has a center hole 20a through which the shaft 10 penetrates on its inner peripheral side.

The permanent magnet insertion hole 20b is provided by penetrating in the axial direction (right-and-left direction in FIG. 1) between the magnetic pole portions 20B on the outside in the radial direction of the cylindrical portion 20A. The permanent magnet 21 is inserted in the permanent magnet insertion hole 20b in the axial direction and fixed by an adhesive. The permanent magnet insertion hole 20b extends radially from the center of the center hole 20a as the basis. The size of the permanent magnet insertion hole 20b (an area when seen from the axial direction) is substantially equal to the size of the permanent magnet 21 (a sectional area in a direction orthogonal to the axial direction). As described above in the example of the present embodiment, the rotor 3 is configured as a so-called IPM (Internal Permanent Magnet) type in which the permanent magnet 21 is embedded in the rotor iron core 20. Moreover, the permanent magnets 21 are provided in so-called I-shaped arrangement in which they are arranged in the radial direction from the vicinity of an outer periphery of the cylindrical portion 20A to the vicinity of the outer periphery of the rotor iron core 20 between the magnetic pole portions 20B of the rotor iron core 20.

The leakage flux prevention hole 20d is a gap for preventing leakage flux provided between the permanent magnet insertion holes 20b at portions inside the radial direction in the magnetic pole portions 20B. The leakage flux prevention hole 20d suppresses leakage of flux from the permanent magnet 21 to the inside in the radial direction from the leakage flux prevention hole 20d and prevents reduction of the magnetic flux contributing to generation of a rotary torque.

The leakage flux prevention hole 20d preferably has a sectional shape pointed toward the outside in the radial direction. By forming the hole having this shape, the flux from the permanent magnets 21 located on the both sides of the leakage flux prevention hole 20d can be led to the outer peripheral side of the rotor iron core 20 smoothly along the pointed shape toward the outside in the radial direction, respectively. In the present embodiment, the effect can be obtained by forming the leakage flux prevention hole 20d having a substantially pentagonal shape. Moreover, the reduction effect of leakage flux to the inner peripheral side can be improved by reducing an interval between a side surface which is a flux generating surface of the permanent magnet 21 and a surface of leakage flux prevention hole 20d facing the side surface.

<Specific example of sensorless control>

FIG. 3 illustrates an example of a configuration of a rotating electric machine controller 300 executing speed control by sensorless control for the rotating electric machine 1. A control block diagram illustrated in FIG. 3 is expressed by a transfer function style. In FIG. 3, the rotating electric machine controller 300 is provided with a subtractor 321, a vector controller 322, a voltage controller 323, a current detector 324, a rectangular-wave voltage generator 325, a coordinate converter 326, a magnetic-pole position calculator 327, and a speed calculator 328.

From a superior controller not shown in FIG. 3, a magnetic flux command value and a speed command value ωr* for controlling driving of the rotating electric machine 1 are inputted into the rotating electric machine controller 300. From the speed command value ωr*, a deviation from a speed estimate value ωr^ which will be described later is taken by the subtractor 321. This deviation and the magnetic flux command value are inputted into the vector controller 322. The vector controller 322 determines a magnetic flux component (d-axis component) and a torque component (q-axis component) of a motor current in the manner that the speed estimate value ωr^ matches the speed command value ωr* regardless of a load state and outputs a voltage command value for controlling a speed and a current of the rotating electric machine 1 as two-phase voltage command values ΔVsd*, ΔVsq* in a rotary orthogonal coordinate system (d-q axis coordinate system). The voltage controller 323 outputs a three-phase driving voltage to the rotating electrical machine 1 on the basis of the inputted two-phase voltage command values ΔVsd*, ΔVsq*. As a result, the rotating electric machine controller 300 can control driving of the rotating electric machine 1 by an arbitrary speed and a torque corresponding thereto (position control is also executed but not shown).

On the other hand, from the superior controller not shown, a magnetic pole position detection control signal is inputted into the rectangular-wave voltage generator 325. The rectangular-wave voltage generator 325 into which the magnetic pole position detection control signal has been inputted outputs a voltage command ΔVh and a phase command Δθh at a rectangular wave voltage (pulse wave voltage) with an arbitrarily set time cycle. The voltage command ΔVh and the phase command Δθh are superposed on the voltage command value ΔVsd* in the voltage controller 323, and an amplitude and a phase of a voltage to be outputted to the rotating electric machine 1 are manipulated.

The current detector 324 detects a current inputted into the rotating electric machine 1 in each of the three phases. The coordinate converter 326 converts these three-phase current values iu, iv, and iw into two-phase current values is α and is β. These two-phase current values is α and isβ are current values of each axis in the orthogonal coordinate system having the u-phase

as the $\alpha$-axis which is a reference axis and the $\beta$-axis orthogonal thereto. Here, if there is deviation in inductance of each of the d-axis and the q-axis of the rotating electric machine 1, that is, if the rotating electric machine 1 has a magnetic salient polarity, the amplitude of the two-phase current values is $\alpha$ and is$\beta$ includes information of a magnetic pole position $\theta$. The magnetic-pole position calculator 327 refers to the voltage command $\Delta$Vh outputted from the rectangular-wave voltage generator 325 and calculates and outputs the magnetic pole position $\theta$ of the rotating electric machine 1 on the basis of the two-phase current values is $\alpha$ and is$\beta$. This calculation of the magnetic pole position $\theta$ may be made conforming to a known method (See JP, A, 2010-172080, for example) and detailed explanation will be omitted here.

The magnetic pole position signal $\theta$ outputted by the magnetic-pole position calculator 327 is inputted into the voltage controller 323 and also into the speed calculator 328. The speed calculator 328 calculates the estimated speed value $\omega$r^ of the rotating electric machine 1 by performing differential operation of the magnetic pole position $\theta$. This speed estimate value $\omega$r^ is used for speed feedback control by taking deviation by subtracting from the speed command value $\omega$r* by the subtractor 321. Though not particularly shown, the magnetic pole position $\theta$ can be considered as a rotation position of the rotating electric machine 1 on the basis of the U-phase, and the superior controller also executes the position feedback control using this magnetic pole position signal $\theta$. As described above, in order to detect the magnetic pole position $\theta$ of the rotating electric machine 1 with high accuracy, it is required that magnetic salient polarity of the rotating electric machine 1 is high.

In the above, the rectangular wave voltage which is a search signal is superposed on the d-axis (voltage command value $\Delta$Vsd*), and the load AC current is inputted only for the q-axis component (only a magnetic flux component is inputted for the d-axis component), but this is not limiting. Regarding the load AC current, input should be made only for the q-axis component, but the search signal may be superposed and inputted into the q-axis or both the d-axis and the q-axis. However, if a high-frequency voltage signal is superposed on the q-axis, pulsation is caused in a torque, and thus, the search signal is preferably superposed on and inputted into only the d-axis as much as possible. Moreover, the d- and q-axis inductance of the rotating electric machine 1 is not inductance to a base wave current but high-frequency inductance defined by a high-frequency superposed voltage signal and a current corresponding thereto, and the high-frequency inductance will be simply referred to as inductance in the following explanation.

<Magnetic pole arrangement on axial orthogonal section of rotating electric machine>

Subsequently, magnetic pole arrangements of the stator 2 and the rotor 3 on an axial orthogonal section will be described by using FIG. 4. Since the magnetic pole arrangement on the axial orthogonal section in FIG. 2 is 180° point symmetry with respect to a rotation axis of the shaft 10, only an upper semicircular portion is illustrated in FIG. 4, and a lower half circular portion is omitted (the same applies to FIGS. 5, and 7 to 11 which will be described later). As described above, the rotating electric machine 1 of the present embodiment is configured as slot combination of so-called 10P12S (P: pole = number of magnetic pole portions, S: slot = number of teeth) provided with 12 teeth 18 on the entire stator 2 and 10 magnetic pole portions 20B on the entire rotor 3. Therefore, in FIG. 4, 6 teeth 18 are illustrated on the half circular portion on the stator 2 side, while 5 magnetic pole portions 20B sandwiched by 6 permanent magnets 21 are illustrated on the half circular portion on the rotor 3 side.

First, in the stator 2, the coil windings 7 are wound around the two adjacent teeth 18 in directions opposite to each other. The two adjacent teeth 18 form a set and correspond to the same current phase. The current phases are arranged in order of U, V, and W in a clockwise direction by the unit of set. That is, in a mechanical static coordinate having the rotation axis of the shaft 10 as an origin, the two adjacent sets of teeth 18 shifted by 60° from each other in arrangement generate an alternating magnetic field with a phase difference electrically shifted by 120° (however, the amplitude of each phase changes in accordance with movement of the d-axis and the q-axis which will be described later with rotation of the rotor 3). In the stator 2 in the present embodiment provided with 12 pieces (6 sets) of the teeth 18, two sets of the teeth 18 correspond to each of the phases U, V, and W of the supplied three-phase AC current, respectively, and the two sets are arranged at positions shifted by 180° in the static coordinate.

Subsequently, on the rotor 3 side, each of the permanent magnets 21 is magnetized in a direction (a direction of an arrow block in the figure) such that the two adjacent permanent magnets 21 facing each other substantially in the circumferential direction. As a result, the magnetic pole portions 20B at positions where N-poles face each other become N-type magnetic pole portions 20BN whose magnetic fluxes go toward the outside in the radial direction. Moreover, the magnetic pole portions 20B at positions where S-poles face each other become S-type magnetic pole portions 20BS whose magnetic fluxes go toward the inside in the radial direction. The N-type magnetic pole portions 20BN and the S-type magnetic pole portions 20BS are provided in 5 pieces each and arranged alternately in the circumferential direction of the rotor iron core 20. As described above, since the magnetic fluxes generated from the two adjacent permanent magnets 21 concentrate to one magnetic pole portion 20B, a magnetic force is enhanced, and at a position where the magnetic pole portion 20B faces the tooth 18, the tooth 18 can be sufficiently magnetically saturated.

In the magnetic pole arrangement, the d-axis is arranged in a direction from the S-type magnetic pole portion 20BS toward the N-type magnetic pole portion 20BN which are adjacent to each other so as to go across the respective center positions in the circumferential direction. That is, an axis extending from the rotation axis of the shaft 10 toward the center direction of the N-type magnetic pole portion 20BN becomes the d-axis, and an axis extending in a direction shifted by 90 degrees in an electric angle from the center direction of the magnetic pole becomes the q-axis. Therefore, a mechanical angular range of 72° among the three adjacent permanent magnets 21 corresponds to an electric angular range of 360° in an electrically orthogonal dq-axis coordinate. The dq-axis coordinate functions as a rotary orthogonal coordinate rotating with respect to the rotation center of the rotor 3 in the static coordinate.

Here, as described above, the U, V, and W phases on the stator 2 side are arranged at an interval of 60° in the static coordinate, and dq-axis coordinates on the rotor 3 side are arranged at an interval of 72° in the static coordinate. As described above, in the configuration in which the slot combination is 10P12S, an installation interval difference corresponding to 12° in the static coordinate is provided between the stator 2 side and the rotor 3 side.

<Magnetic flux distribution on axial orthogonal section of rotating electric machine>

FIG. 5 illustrates generation distribution of a magnetic flux in the rotating electric machine 1 with the magnetic pole arrangement as described above. FIG. 5 illustrates a state in which, during a rotating operation of the rotor 3, the center (and the q-axis across it) of one N-type magnetic pole portion 20BN is located in the middle between the V-phase and the W-phase, and the center (and the d-axis across it) of one permanent magnet 21 matches the center position of the U-phase (the same applies to FIGS. 7A to 11B which will be described later). Moreover, in a three-phase AC motor, an AC current having a phase difference of 120° between each of the U, V, and W-phases is applied, but FIG. 5 illustrates the magnetic flux distribution of a state in which a current instantaneous value of the U-phase is zero and an instantaneous current flows from the V-phase to the W-phase.

A principle of the present embodiment will be described below by using the magnetic flux distribution in the state of FIG. 5. As illustrated in FIG. 5, an arrangement relationship of the stator 2 and the rotor 3 in which a magnet flux of 1-phase coil becomes the maximum appears every 12° in terms of a mechanical angle (every 60° in terms of electric angle), but the principle of the present embodiment can be similarly applied to the positional relationship between them. In order to facilitate understanding of the explanation, the magnetic flux distribution in the state of FIG. 5 will be used.

First, if an AC current in the phase corresponding to the coil winding 7 wound around two teeth 18 of the same set corresponding to each phase is made to flow on the stator 2 side, an alternating magnetic field (See a thin broken arrow in the figure) is generated so as to circulate in a path passing through the two teeth 18 of the set and the yoke 15. However, in the example of the present embodiment, the distal ends of the adjacent widened portions 18b are separated from each other in the circumferential direction as described above. Thus, an alternating magnetic flux generated by the alternating magnetic field circulates by passing through the magnetic pole portion 20B on the rotor 3 side approximating in the radial direction.

On the other hand, a constant magnetic flux (See a thick solid arrow in the figure) generated in the radial direction from the distal end on the outer peripheral side of each of the magnetic pole portions 20BN and 20BS on the rotor 3 side circulates by passing through each of the teeth 18 facing each other in the radial direction. There are mainly two passage paths in which the constant magnetic flux from each of the magnetic pole portions 20BN and 20BS passes through each of the teeth 18. The first passage path is a body portion passage path passing so as to circulate through the body portions 18a of the two adjacent teeth 18 and the yoke 15. The second passage path is a widened portion passage path passing only through the widened portion 18b of one of the teeth 18 and circulating so as to leak.

Subsequently, through each of the teeth 18 on the stator 2 side, a magnetic flux obtained by combining the alternating magnetic flux generated by the AC current flowing through each of the coil windings 7 as described above and the constant magnetic flux flowing in from the magnetic pole portions 20BN and 20BS facing each other in the radial direction passes. Here, if directions of the alternating magnetic flux by the AC current and the constant magnetic flux by the permanent magnet 21 match each other, magnetic saturation in the teeth 18 is enhanced. If the directions of the alternating magnetic flux and the constant magnetic flux are opposite to each other, the magnetic saturation in the teeth 18 is weakened.

On the other hand, in one set of the teeth 18 corresponding to the U-phase in which the instantaneous current value is zero, an alternating magnetic flux is not generated, and only the constant magnetic flux from the two magnetic pole portions 20BN and 20BS on the both sides adjacent to the permanent magnet 21 which matches the center position of the U-phase passes through the inside of the tooth body portion 18a. Since the circumferential position of the permanent magnet 21 is located between the distal ends of the adjacent widened portions 18b, there is little leakage flux passing through the widened portion passage path, and the path through which the constant magnetic flux passes is only the body portion passage path. As described above, the d-axis arranged across the permanent magnet 21 which matches the center position of the U-phase, that is, the tooth body portion 18a in the d-axis direction which matches the phase in which the instantaneous current value is zero can be magnetically saturated the most easily as compared with the other tooth 18.

On the other hand, the constant magnetic flux from the N-type magnetic pole portion 20BN located in the middle between the V-phase and the W-phase branches to the V-phase side and the W-phase side and further branches to the body portion passage path and the widened portion passage path, respectively. Here, regarding the two permanent magnets 21 on the both sides adjacent to the N-type magnetic pole portion 20BN, the respective circumferential positions are located at substantially the center position of the widened portion 18b. Thus, in the constant magnetic flux respectively branching to the V-phase side and the W-phase side, the magnetic flux can concentrate on the widened portion passage path more easily than the body portion passage path (the ratio which becomes a leakage flux is larger). That is, in the periphery of the q-axis arranged across the V-phase and the W-phase, magnetic flux density is higher in the widened portion 18b on the inner peripheral side in the entire teeth 18, while the magnetic flux density is lower in the body portion 18a.

Moreover, since the constant magnetic flux passing through the body portion passage path on the V-phase side has a passing direction matched with that of the alternating magnetic flux generated in the V-phase, it tends to enhance magnetic saturation in the tooth body portion 18a. However, since the passing direction of the constant magnetic flux passing through the widened portion passage path on the V-phase side (that is, the leakage flux to the V-phase side) is opposite to that of the alternating magnetic flux generated in the V-phase, it tends to weaken the magnetic saturation at the distal end of the widened portion 18b of the tooth 18.

Moreover, since the passing direction of the constant magnetic flux passing through the body portion passage path on the W-phase side is opposite to that of the alternating magnetic flux generated in the W-phase, it tends to weaken the magnetic saturation in the tooth body portion 18a. However, since the passing direction of the constant magnetic flux passing through the widened portion passage path on the W-phase side (that is, the leakage flux to the W-phase side) matches that of the alternating magnetic flux generated in the W-phase, it tends to enhance the magnetic saturation at the distal end of the widened portion 18b of the tooth 18.

In the respective tooth widened portions 18b of the both V-phase and W-phase, too, there are a spot 18b1 where the directions of the constant magnetic flux and the alternating magnetic flux match each other and the magnetic flux is enhanced and a spot 18b2 where the magnetic flux is weakened. In the spot 18b2 where the magnetic flux is weakened, as the load current becomes larger, the magnetic saturation is alleviated, and the spot becomes a region in which the magnetic flux can easily pass.

In conclusion, in the teeth in the d-axis direction, the body portion 18a is magnetically saturated in general, while in the teeth 18 in the vicinity of the q-axis arranged across the V-phase and the W-phase, that is, in the vicinity in the q-axis direction across the two phases through which the instantaneous current value flows, the widened portion 18b is magnetically saturated. Moreover, when a load current is applied to the q-axis, the spot 18b1 where the magnetic flux is enhanced and the spot 18b2 where the magnetic flux is weakened are generated.

<Features of the present embodiment>

Assuming that the magnetic salient pole ratio of the rotor 3 is $\rho$, inductance of the q-axis is Lq, and inductance of the d-axis is Ld, the following relationship is established:

$$\rho = Lq/Ld \ldots (1)$$

As described above, in order to detect the magnetic pole position $\theta$ of the rotating electric machine 1 with high accuracy in the sensorless control, the magnetic salient pole ratio p in the rotor 3 is required to be high.

Here, the inductance L is defined by a magnetic flux $\phi$ and a current i in the formula (2), and the more the magnetic flux is generated for the current, the larger the inductance becomes.

$$\phi = Li \ldots (2)$$

Moreover, since the relationship among a voltage v, the current i, and the inductance L is expressed by the formula (3), the larger the AC current to the AC voltage, the smaller the inductance becomes.

$$v = d\phi/dt = Ldi/dt \ldots (3)$$

By using the nature of the inductance, in the sensorless control, a rectangular wave voltage (high-frequency voltage signal) outputted from the rectangular-wave voltage generator 325 is superposed on the two-phase voltage command values $\Delta Vsd^*$ and $\Delta Vsq^*$, and the magnetic pole position $\theta$ is estimated on the basis of amplitude deviation between the two-phase current values is $\alpha$ and is$\beta$ generated by inductance deviation between the d-axis and the q-axis.

In the example of the present embodiment, the d-axis and the q-axis are arranged on five spots on the rotor 3, respectively, and the respective inductances are different depending on the arrangement relationship with the teeth 18 and the alternating magnetic flux. Among them, the teeth 18 in the d-axis direction matching the phase (U-phase) in which the instantaneous current value is zero can be magnetically saturated the most easily, that is, it becomes the d-axis with the smallest inductance. Moreover, the teeth 18 in the q-axis direction of the arrangement across the two phases (the V-phase and the W-phase) through which the instantaneous current value flows are magnetically saturated the least easily and become the q-axis with the largest inductance. The d-axis inductance Ld (a denominator of the formula (1)) and the q-axis inductance Lq (a numerator of the formula (1)) in the entire rotor 3 are a total amount of the d-axis inductance by 12 coils and a total amount of the q-axis inductance by 12 coils, respectively.

In order to apply a rotary torque to the rotor 3, it is only necessary that a load current of the q-axis component is applied (the d-axis component does not influence the torque). However, if the load current of the q-axis component largely increases, the magnetic saturation of the rotor core increases, and the magnetic salient pole ratio p caused by the rotor core shape lowers. That is, detection accuracy of the magnetic pole position θ of the rotating electric machine 1 deteriorates.

On the other hand, by using the magnetic saturation of the teeth 18 in order to improve the magnetic salient pole ratio p of the rotating electric machine 1, it is possible to improve the magnetic salient pole ratio p. That is, it is only necessary that the inductance of the d-axis matching the phase (U-phase) in which the instantaneous current value is zero is further reduced, and the inductance of the q-axis of the arrangement across the two phases (the V-phase and the W-phase) through which the instantaneous current value flows is further increased.

In the present embodiment, in a non-energized state of each of the coil windings 7 of the stator 2 (hereinafter also referred to as "no-load state" as appropriate), each of the teeth 18 is configured in the manner that the tooth 18 facing the magnetic pole portion 20B in the radial direction is substantially magnetically saturated only by the constant magnetic flux from the permanent magnet 21. As specific means for that purpose, a width dimension of each of the teeth 18 in the circumferential direction is set in the manner that the tooth 18 facing the magnetic pole portion 20B is substantially magnetically saturated.

Here, an electromagnetic steel plate constituting the tooth 18 in general has magnetic saturation properties indicated by a B-H curve in FIG. 6. That is, if the magnetic field strength applied to the electromagnetic steel plate gradually increases from zero, while the magnetic field strength is low, the magnetic flux density rises substantially in proportion with that. However, if the magnetic field strength increases to some degree or more, the rise rate of the magnetic flux density lowers, and the magnetic flux density does not rise any longer in the last. In the present embodiment, a state in which the magnetic flux density reaches 1.6 T (tesla) or more is referred to as a "substantially magnetically saturated" state. The magnetic flux density in the substantially magnetically saturated state is not limited to this value but is changed as appropriate in accordance with a material constituting the tooth 18 and the like.

Moreover, a state in which the tooth 18 and the magnetic pole portion 20B "face each other in the radial direction" refers to a state in which at least the tooth body portion 18a in the tooth 18 faces the magnetic pole portion 20B in the radial direction. Specifically, it means a state in which the body portion 18a is within an angular range of the magnetic pole portion 20B in the circumferential direction.

As a result, on the d-axis matching the phase (U-phase) where the instantaneous current value is zero, the facing tooth body portion 18a is substantially magnetically saturated (eliminating an allowance for passage of the magnetic flux) only by the constant magnetic flux line from the permanent magnet 21, and the inductance can be minimized. That is, the total amount Ld of the inductance of the d-axis in the entire rotor 3 can be reduced. Moreover, on the q-axis of the arrangement across the two phases (the V-phase and the W-phase) through which the instantaneous current value flows, the facing tooth body portion 18a can weaken the magnetic saturation and increase the inductance (this point will be described in detail in FIGS. 7A to 11B later). That is, the total amount Ld of the inductance of the q-axis of the entire rotor 3 can be increased. As a result, since the denominator (Ld) on the right side of the formula (1) can be made smaller and the numerator (Lq) on the right side can be made larger, the magnetic salient pole ratio p of the rotor 3 can be improved.

<Specific influence on magnetic salient pole ratio by change of tooth width>

FIGS. 7A to 11B specifically illustrate an influence on the magnetic salient pole ratio p by the change in the tooth width, as described above. Each of FIGS. 7A, 8A, 9A, 10A, and 11A corresponds to the present embodiment, and a circumferential width of each of the tooth body portions 18a is set to W1. W1 is set to such a value that the tooth 18 facing the magnetic pole portion 20B in the no-load state is substantially magnetically saturated only by the constant magnetic flux from the permanent magnet 21. On the other hand, each of FIGS. 7B, 8B, 9B, 10B, and 11B corresponds to a comparative example. The circumferential width of each of the tooth body portions 18a is set to W2 larger than the W1. In this comparative example, the tooth 18 facing the magnetic pole portion 20B in the no-load state is not substantially magnetically saturated only by the constant magnetic flux from the permanent magnet 21. Moreover, FIGS. 7A and 7B illustrate magnetic flux distribution in the no-load state in which the AC current is not supplied at all to the stator 2, FIGS. 8A and 8B illustrate a state in which a load AC current (corresponding to the load current) of the q-axis component (torque component) is supplied in 50% of a rated current, FIGS. 9A and 9B illustrate a state in which the load AC current is supplied in 100% of the rated current, FIGS. 10A and 10B illustrate a state in which the load AC current is supplied in 150% of the rated current, and FIGS. 11A and 11B illustrate a state in which the load AC current is supplied in 200% of the rated current, respectively. In each of the figures, the d-axis on which the inductance becomes the minimum and the q-axis on which the inductance becomes the maximum are illustrated similarly to FIG. 5.

As described above, in the comparative example, the width dimension W2 in the circumferential direction of each of the tooth body portions 18a is set relatively larger (See FIGS. 7B to 11B). Thus, on the d-axis matching the U-phase in which the instantaneous current value is zero, the tooth body portions 18a facing the magnetic pole portions 20BN and 20BS have not been magnetically saturated but there is still an allowance for more magnetic fluxes to pass through. Thus, if the load AC current increases, the inductance of the d-axis fluctuates, influenced by the alternating magnetic fluxes of the other V-phase and W-phase. That is, the total amount Ld of the d-axis inductance of the entire rotor 3 in the formula (1) can easily fluctuate.

On the other hand, in the present embodiment as described above, the width dimension in the circumferential direction of each of the tooth body portions 18a is set to W1 (See FIGS. 7A to 11A). Thus, on the d-axis matching the U-phase in which the instantaneous current value is zero, the tooth body portion 18a facing the magnetic pole portions 20BN and 20BS has been already substantially magnetically saturated only by the constant magnetic flux line from the permanent magnet 21. That is, since there is no allowance for further passage of the magnetic flux, even if the load AC current largely increases, the inductance of the d-axis is kept small, not being influenced by the alternating magnetic fluxes in the other V-phase and W-phase (kept at the large magnetic flux density). That is, even if the load AC current increases, the total amount Ld of the d-axis inductance of the entire rotor 3 in the formula (1) is kept small.

On the other hand, in the comparative example, if the load AC current gradually increases from 0% to 200%, magnetic saturation progresses even in the V-phase and the W-phase in general, and the inductance of the q-axis of the arrangement across them generally lowers.

On the contrary, in the present embodiment, if the load AC current gradually increases from 0% to 200%, the inductance of the q-axis of the arrangement across the V-phase and the W-phase through which the instantaneous current value flows gradually increases. That is because, as the load AC current increases, an effect to weaken the magnetic saturation at the distal end of the tooth widened portion 18b indicated by P1, P2, and P3 in the figure becomes greater. As illustrated in the FIG. 5, P1 is a spot where the magnetic saturation weakens since the direction of the constant magnetic flux (leakage flux) passing through the widened portion passage path becomes opposite to the alternating magnetic flux in the periphery of the q-axis. P2 is a spot where the magnetic saturation weakens since the direction of the constant magnetic flux passing through the body portion passage path and the widened portion passage path on the W-phase side becomes opposite to the alternating magnetic flux in the periphery of the q-axis. Moreover, P3 is a spot where the magnetic saturation weakens since the direction of the constant magnetic flux circulating through the body portion passage path on the W-phase side and returning to the magnetic pole portion 20BS becomes opposite to the alternating magnetic flux. As described above, though the magnetic saturation progresses in the V-phase and the W-phase in general as the load AC current increases, the magnetic saturation is largely weakened at the spots P1, P2 and P3 and as a result, the inductance on the q-axis increases in general (See FIGS. 7A to 11A). As a result, the total amount Lq of the q-axis inductance of the entire rotor 3 in the formula (1) can be increased in accordance with the increase in the load AC current.

In the comparative example, too, a phenomenon that the magnetic saturation is weakened at the spots corresponding to the aforementioned P1, P2, and P3 as the load AC current increases is found. However, in the case of the present embodiment, since the width dimension W1 in the circumferential direction of each of the tooth body portions 18a is set smaller than W2, the magnetic saturation has progressed on the tooth body portion 18a in the d-axis direction and is difficult to be influenced by mutual interference by the d-axis magnetic flux and the q-axis magnetic flux. As a result, in the comparative example, if the load AC current increases, the magnetic salient pole ratio p can easily lower, but in the present embodiment, even if the load AC current (motor load) increases, the magnetic salient pole ratio p can be improved.

In the comparative example, the width dimension of the teeth 18 is large, and the tooth body portion 18a facing the magnetic pole portions 20BN and 20BS is not substantially magnetically saturated only by the constant magnetic flux by the permanent magnet 21. In such case, by allowing a positive d-axis current not contributing to a torque to flow through each of the coil windings 7 of the stator 2, the teeth 18 in the d-axis direction can be substantially magnetically saturated, and the magnetic salient pole ratio similar to that of the present embodiment can be obtained.

<Effect of the present embodiment>

As described above, in the rotating electric machine 1 of the present embodiment, the stator iron core 5 is configured such that the tooth 18 facing the magnetic pole portion 20B in the radial direction is substantially magnetically saturated by the permanent magnet 21 in the non-energized state of the coil winding 7. As a result, the d-axis inductance Ld can be kept small.

On the other hand, in the teeth 18 in the q-axis direction, only the distal end portion is magnetically saturated, and the magnetic saturation is enhanced on a portion where the direction of the magnetic flux by the permanent magnet 21 matches with that of the magnetic flux by the load AC current, but the magnetic saturation is weakened on portions (P1, P2, and P3) where the directions of the both magnetic fluxes are opposite. On the portion where the magnetic saturation weakens, the magnetic flux can flow more easily, and thus, the inductance increases. In the present embodiment, by increasing the load AC current, the magnetic saturation on the distal end portions of the teeth 18 in the q-axis direction can be alleviated, and thus, the q-axis inductance Lq can be increased in a high load state.

As described above, it becomes possible to ensure the magnetic pole salient pole ratio p even in a high load state without increasing the physical size of the rotating electric machine 1. As a result, even if the load torque is increased, highly accurate position estimation can be made.

FIG. 12 illustrates a simulation result of high-frequency inductance if a search signal is superposed and inputted in a state in which the load current is applied to the q-axis (a state in which a current is applied from the V-phase to the W-phase) in the present embodiment. The lateral axis in the figure indicates a superposed voltage phase over an electric angular range of 180° in the dq-axis coordinate, in which 0° corresponds to the d-axis and 90° to the q-axis. Moreover, the vertical axis in the figure indicates high-frequency inductance and corresponds to ease of passage of the high-frequency magnetic flux generated by the high-frequency voltage signal.

In this FIG. 12, with whichever load (intensity of the AC load current) it operates, the high-frequency inductance of the d-axis changes in a sinusoidal curve, and their phases substantially match. A ratio of the maximum value to the minimum value of this sinusoidal wave (maximum value/minimum value) corresponds to the magnetic pole salient pole ratio ρ. That is, the larger the amplitude of the sinusoidal wave is, the higher the magnetic pole salient pole ratio p is. In the case of the present embodiment, as illustrated, the sufficient magnetic pole salient pole ratio p can be ensured even in the no-load state, and moreover, it is known that the larger the load becomes, the higher the magnetic pole salient pole ratio p becomes.

On the other hand, FIG. 13 is a diagram equivalent to the comparative example described above. In FIG. 13, the magnetic salient pole ratio p is low in the no-load state, and even if the load is increased, the ratio does not become as high as that in the present embodiment. Moreover, in this comparative example, the larger the load is, the larger the phase of the sinusoidal wave is shifted. That is because the teeth 18 in the d-axis direction are not sufficiently magnetically saturated, and the magnetic flux by the q-axis current influences the magnetic flux of the d-axis. As described above, if the phase of the sinusoidal curve of the d-axis inductance fluctuates, detection accuracy of the magnetic pole position θ of the rotating electric machine 1 is greatly damaged. As described above, the present embodiment can ensure the magnetic pole salient pole ratio p higher than that of the comparative example and can detect the magnetic pole position θ of the rotating electric machine 1 with higher accuracy.

Moreover, particularly in the present embodiment, the tooth 18 has the body portion 18a and the widened portion 18b. Since the tooth 18 has the widened portion 18b whose width in the circumferential direction is expanded, an area in which the stator 2 faces the rotor 3 is increased, and a flow of the magnetic flux between the stator 2 and the rotor 3 can be made smooth.

Moreover, particularly in the present embodiment, the rotor 3 is of an IPM type in which the permanent magnet 21 is embedded in the rotor iron core 20. As a result, as compared with an SPM type (Surface Permanent Magnet) in which the permanent magnet 21 is provided on the surface of the rotor iron core 20, reluctance torque can be also used as a rotating force in addition to the magnet torque, and thus, a rotating electric machine having a small size and a high torque can be realized.

Moreover, particularly in the present embodiment, the permanent magnet 21 is arranged in the radial direction from the vicinity of the outer periphery of the cylindrical portion 20A to the vicinity of the outer periphery of the rotor iron core 20 between the magnetic pole portions of the rotor iron core 20 (so-called I-shaped arrangement). By employing such arrangement configuration, it is possible to increase an input amount of the permanent magnet 21, and to concentrate the magnetic flux on the magnetic pole portion 20B.

Moreover, particularly in the present embodiment, the coil winding 7 is wound around the tooth 18 in a concentrated winding. In general, if the magnetic pole salient pole ratio p is to be improved, distribution winding is employed, but the physical size of the rotating electric machine 1 is increased in this case. In the present embodiment, by means of the magnetic saturation of the tooth 18 in the d-axis direction, the magnetic pole salient pole ratio p can be ensured and thus, the concentrated winding can be employed for the coil winding 7. Therefore, the size of the rotating electric machine 1 can be reduced.

Moreover, particularly in the present embodiment, the rotating electric machine controller 300 is configured to supply a high-frequency voltage signal to the d-axis and a load current to the q-axis. As a result, the magnetic pole position θ of the rotating electric machine 1 can be estimated by using a change in the inductance when the high-frequency voltage signal is applied. Accordingly, the rotating electric machine 1 can ensure the magnetic pole salient pole ratio p even in a high load state. Therefore, even if the load torque of the rotating electric machine 1 is increased, the rotating electric machine controller 300 which can execute highly accurate sensorless control can be realized.

If the tooth body portion 18a facing the magnetic pole portions 20BN and 20BS is not substantially magnetically saturated only by the constant magnetic flux by the permanent magnet 21, the teeth 18 in the d-axis direction can be substantially magnetically saturated by allowing a positive d-axis current not contributing to a torque to flow through each of the coil windings 7 of the stator 2. As a result, the magnetic salient pole ratio p similar to that of the present embodiment can be obtained, and the rotating electric machine controller 300 which can execute highly accurate sensorless control can be realized.

<Variation>

The embodiment described above is capable of various variations within a range not departing from the gist and technical idea thereof.

For example, the embodiment is configured such that the distal ends of the widened portions 18b of the two adjacent teeth 18 are separated from each other in the circumferential direction, but this is not limiting. For example, as illustrated in FIG. 14 corresponding to FIG. 2, it may be so configured that widened portions 118b are mutually connected between adjacent teeth 118, and a yoke 115 and each of the widened portions 118b of a stator iron core 105 are capable of being split by each of the teeth 118.

As in this variation, in the structure in which the widened portions 118b of the teeth 118 are mutually connected between the adjacent teeth 118, if a configuration in which the teeth 118 in the d-axis direction are not magnetically saturated is employed, a leakage flux occurs between the adjacent teeth 118, and the magnetic pole salient pole ratio p becomes small due to an increase in leakage inductance of the d-axis. Thus, the connection between the widened portions 118b needs to be split.

On the other hand, as in the embodiment, if the teeth 118 in the d-axis direction are to be magnetically saturated, the leakage flux between the adjacent teeth 118 can be reduced by magnetic saturation up to the distal ends of the teeth. As a result, the increase in the leakage inductance of the d-axis can be prevented and thus, the magnetic pole salient pole ratio p can be ensured. As a result, as in this variation, since the stator iron core 105 configured such that the yoke 115 and the widened portion 118b can be split by each of the teeth 118 can be used, the coil winding 7 can be wound in a concentrated winding and have a high space factor, and the rotating electric machine 101 having a small size and a high torque can be realized.

Moreover, for example, in the embodiment, the slot combination configuration of 10P12S was explained as an example, but even in the other slot combination configurations, only an arrangement interval angle among each of the U-phase, the V-phase, and the W-phase or the arrangement interval angle of each of the dq-axis coordinates is changed and arrangement relationships between each of the U-phase, the V-phase, and the W-phase and each of the dq-axis coordinates are not changed, and thus, the similar effect can be obtained.

Moreover, for example, in the embodiment, it is configured such that the tooth 18 facing the magnetic pole portion 20B in a no-load state is substantially magnetically saturated only by the magnetic flux from the permanent magnet 21 by appropriately setting the width dimension in the circumferential direction of each of the teeth 18, but this is not limiting. For example, a method of improving a magnetic force of the permanent magnet 21 provided in the rotor 3 or of appropriately setting both the width dimension of the tooth 18 and the magnetic force of the permanent magnet 21 may be employed. These methods correspond to means for substantially magnetically saturating the tooth facing the magnetic pole portion in the radial direction in a non-energized state of the stator winding described in each claim.

Moreover, for example, in the embodiment, the example in which the rotating electric machine 1 is a rotary motor was explained, but this is not limiting. For example, though not particularly shown, the method of the present embodiment may be applied to a linear motor in which a rotor linearly moves with respect to a stator. In this case, either one of the stator and the rotor is provided with the magnetic pole portion by the permanent magnet, while the other is provided with the coil winding generating a magnetic field and the tooth, but in any case, it is only necessary to configure such that the tooth facing the magnetic pole portion in a no-load state is substantially magnetically saturated only by the magnetic flux from the permanent magnet.

In the above, the example in which the rotating electric machine 1 is a motor was explained, but the present embodiment can be also applied to the case in which the rotating electric machine is a generator.

Moreover, other than those described above, methods of the aforementioned embodiment and each of the variations may be used in combination as appropriate.

Though not particularly exemplified, the embodiment and each of the variations are put into practice with various changes within a range not departing from the gist thereof.

## Claims

1. A rotating electric machine (1; 101) including a stator (2) and a rotor (3), **characterized in that**:

    the rotating electric machine (1; 101) comprises:

        a rotor iron core (20) including a plurality of magnetic pole portions (20B) in a circumferential direction;
a plurality of permanent magnets (21) provided on the rotor iron core (20); and
a stator iron core (5; 105) including a plurality of teeth (18; 118) around each of which a stator winding (7) is wound and configured in such a manner that the tooth (18: 118) facing the magnetic pole portion (20B) in the radial direction is substantially magnetically saturated by the permanent magnet (21) in a non-energized state of the stator winding (7).

**2.** The rotating electric machine (1; 101) according to claim 1, wherein:

a width in the circumferential direction of the teeth (18; 118) of the stator iron core (5; 105) is set in such a manner that the tooth (18; 118) facing the magnetic pole portion (20B) is substantially magnetically saturated.

**3.** The rotating electric machine (1; 101) according to claim 2, wherein:

the tooth (18; 118) comprises:

a body portion (18a; 118a) provided projecting to the inner peripheral side from a cylindrical yoke (15; 115); and
a widened portion (18b; 118b) which is provided at a distal end on the inner peripheral side of the body portion (18a; 118a) and the width of which in the circumferential direction is expanded, and
the width in the circumferential direction of the body portion (18a; 118a) of the stator iron core (5; 105) is set in such a manner that the body portion (18a; 118a) is substantially magnetically saturated by the permanent magnet (21) when at least the body portion (18a; 118a) of the tooth (18; 118) faces the magnetic pole portion (20B) in the radial direction.

**4.** The rotating electric machine (1; 101) according to claim 3, wherein:

the widened portions (118b) are mutually connected between the adjacent teeth (118), and
the stator iron core (105) is configured in such a manner that the yoke (115) and the widened portion (118b) can be split for each of the teeth (118).

**5.** The rotating electric machine (1; 101) according to any one of claims 1 to 4, wherein:

the permanent magnets (21) are embedded in the rotor iron core (20).

**6.** The rotating electric machine (1; 101) according to claim 5, wherein:

the rotor iron core (20) is fixed to a shaft (10) and includes a cylindrical portion (20A) on which the plurality of magnetic pole portions (20B) is arranged on the outer peripheral side, and
the permanent magnet (21) is arranged in the radial direction from the vicinity of an outer periphery of the cylindrical portion (20A) to the vicinity of an outer periphery of the rotor iron core (20) between the magnetic pole portions (20B) of the rotor iron core (20).

**7.** The rotating electric machine (1; 101) according to any one of claims 1 to 6, wherein:

the stator winding (7) is wound around the tooth (18; 118) in a concentrated winding method.

**8.** A controller (300) of a rotating electric machine configured to executes at least any one of torque control, speed control, and position control of the rotating electric machine (1; 101) according to any one of claims 1 to 7 without using positional sensor and speed sensor, **characterized in that**:

when an axis extending in a center direction of the magnetic pole portion (20B) from a rotation axis is d-axis and an axis extending in a direction shifted by 90 degrees from the center direction in an electric angle is q-axis, the controller (300) is configured to supply a high-frequency voltage signal to at least either one of the d-axis and the q-axis and to supply a load current to the q-axis.

**9.** A controller (300) of a rotating electric machine configured to executes, without using positional sensor and speed sensor, at least any one of torque control, speed control, and position control of the rotating electric machine including a stator (2) and a rotor (3), a rotor iron core (20) including a plurality of magnetic pole portions (20B) in a circumferential direction, a plurality of permanent magnets (21) provided on the rotor iron core (20), and a stator iron core (5; 105) including a plurality of teeth (18; 118) around each of which a stator winding (7) is wound, **characterized in that**:

when an axis extending in a center direction of the magnetic pole portion (20B) from a rotation axis is d-axis and an axis extending in a direction shifted by 90 degrees from the center direction in an electric angle is q-axis, the controller (300) is configured to supply a high-frequency voltage signal to at least either one of the d-axis and the q-axis, and to supply a positive current to the d-axis in such a manner that the tooth (18; 118) facing the magnetic pole portion (20B) in the radial direction is substantially magnetically saturated, and to supply a load current to the q-axis.

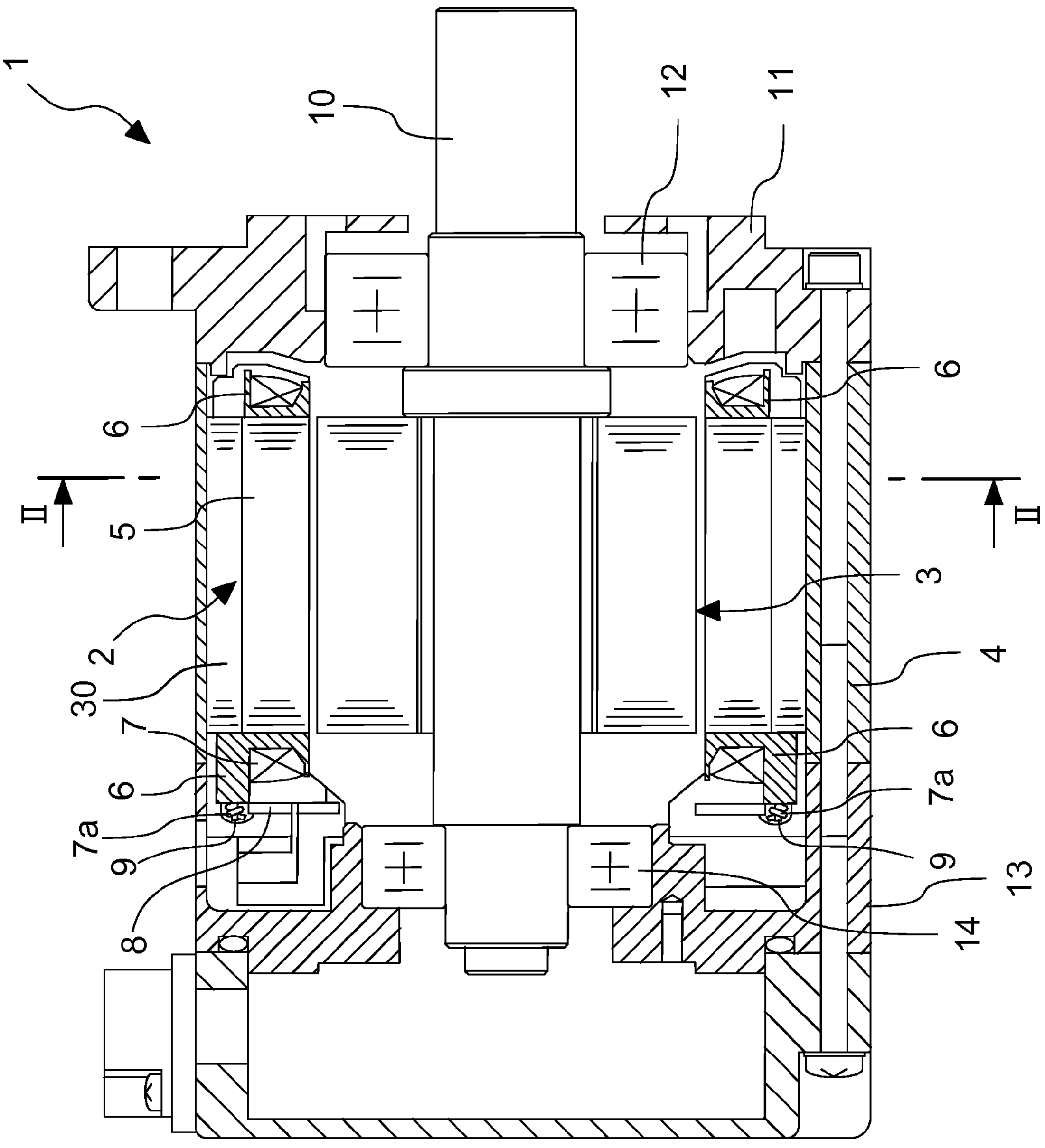


[FIG. 1]

[FIG. 2]

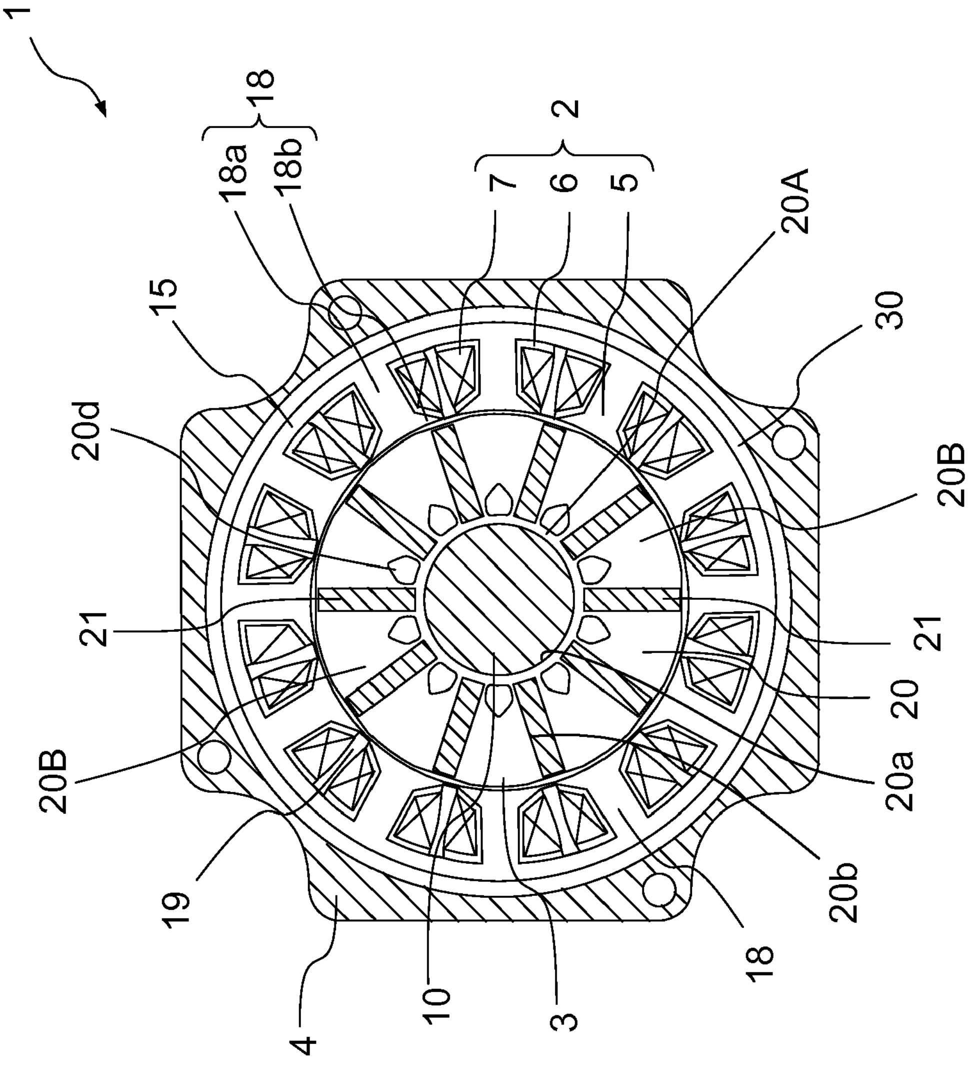

[FIG. 3]

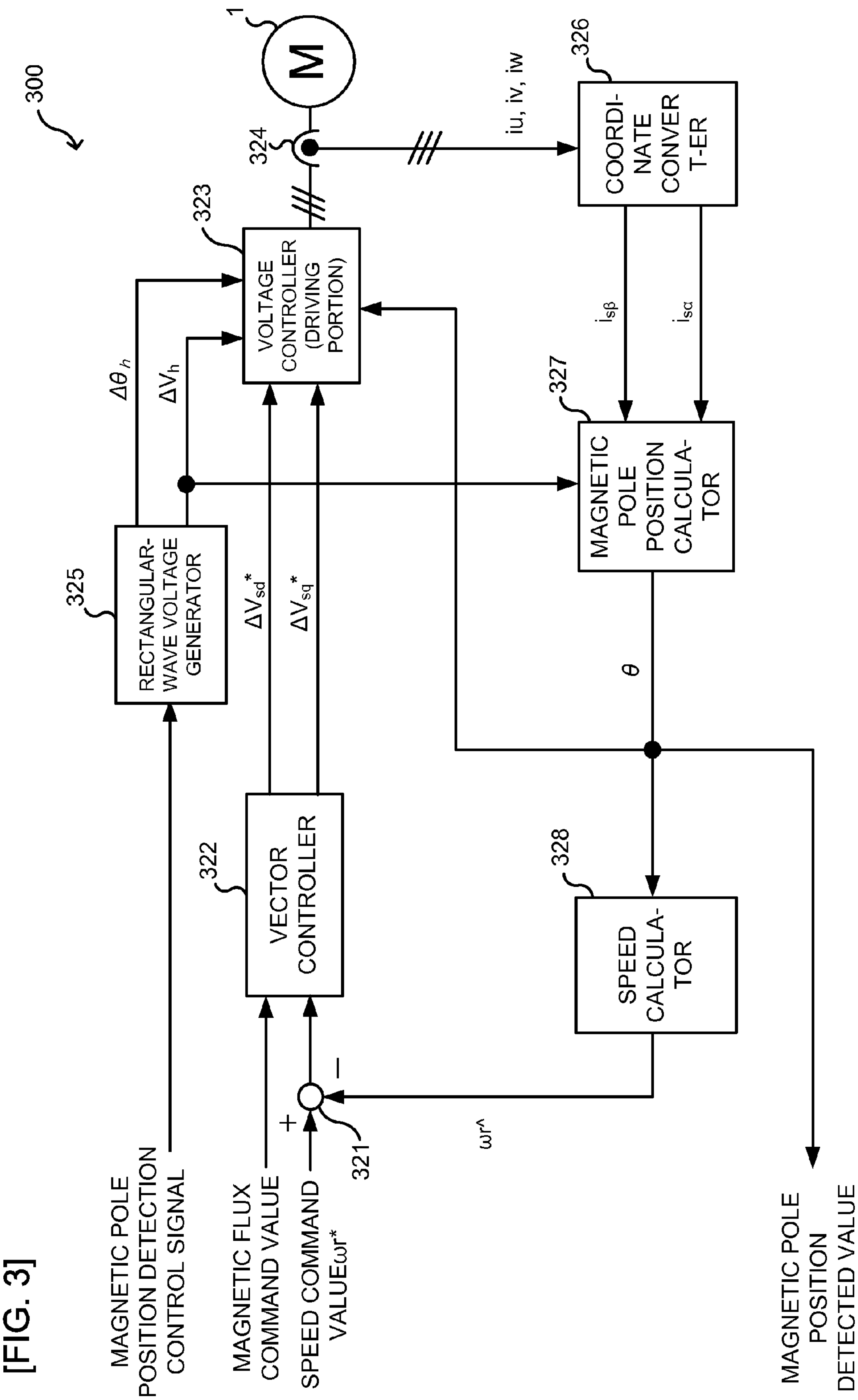
300
1
M
324
323
326
iu, iv, iw
COORDI-NATE CONVER T-ER
VOLTAGE CONTROLLER (DRIVING PORTION)
$\Delta\theta_h$
$\Delta V_h$
$i_{s\beta}$
$i_{s\alpha}$
327
MAGNETIC POLE POSITION CALCULA-TOR
325
RECTANGULAR-WAVE VOLTAGE GENERATOR
$\Delta V_{sd}^*$
$\Delta V_{sq}^*$
$\theta$
322
VECTOR CONTROLLER
328
SPEED CALCULA-TOR
−
+
321
ωr^
MAGNETIC POLE POSITION DETECTION CONTROL SIGNAL
MAGNETIC FLUX COMMAND VALUE
SPEED COMMAND VALUEωr*
MAGNETIC POLE POSITION DETECTED VALUE

[FIG. 4]

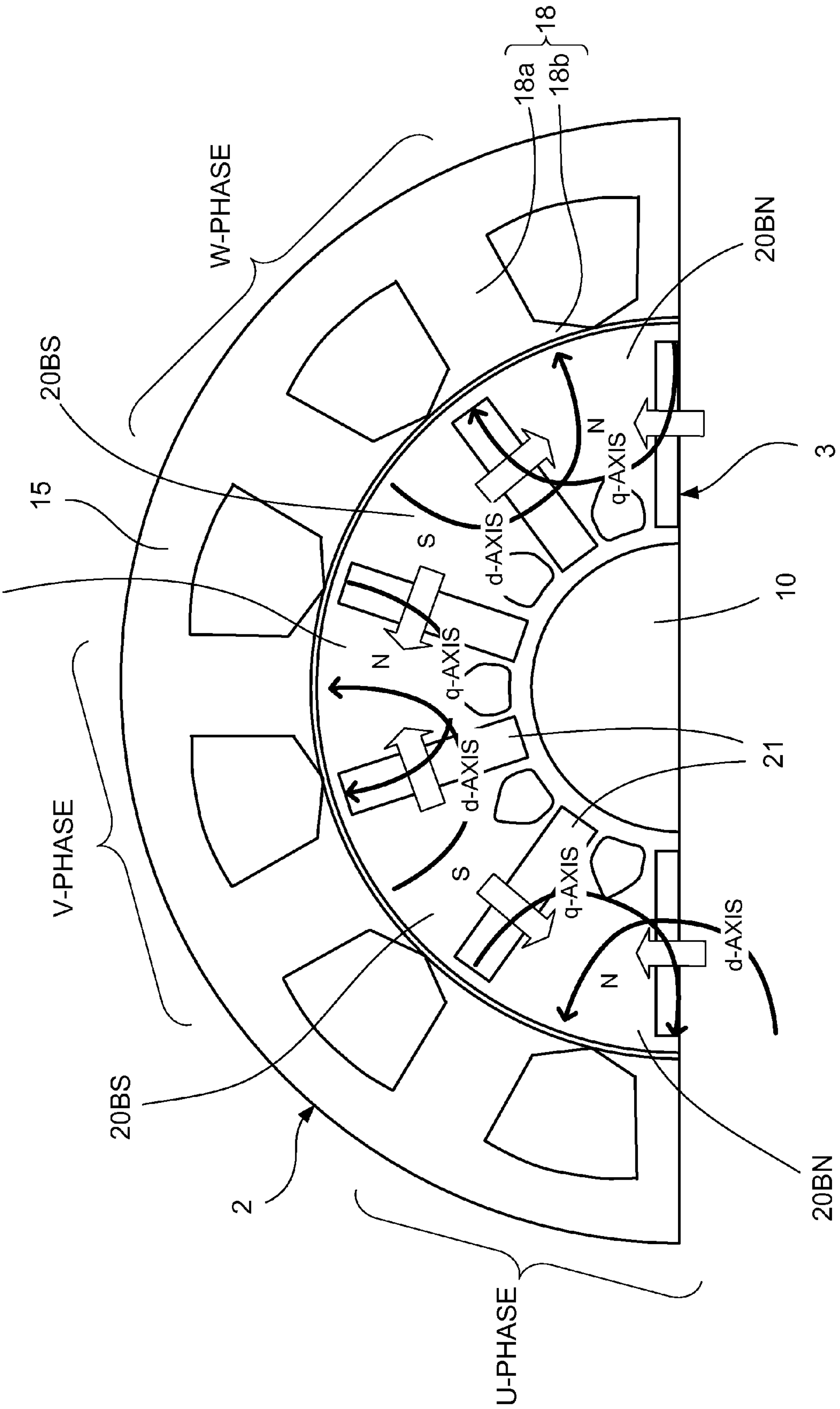
18
18a
18b
W-PHASE
20BN
20BS
15
3
10
20BN
q-AXIS
d-AXIS
N
S
21
V-PHASE
20BS
2
20BN
U-PHASE

[FIG. 5]

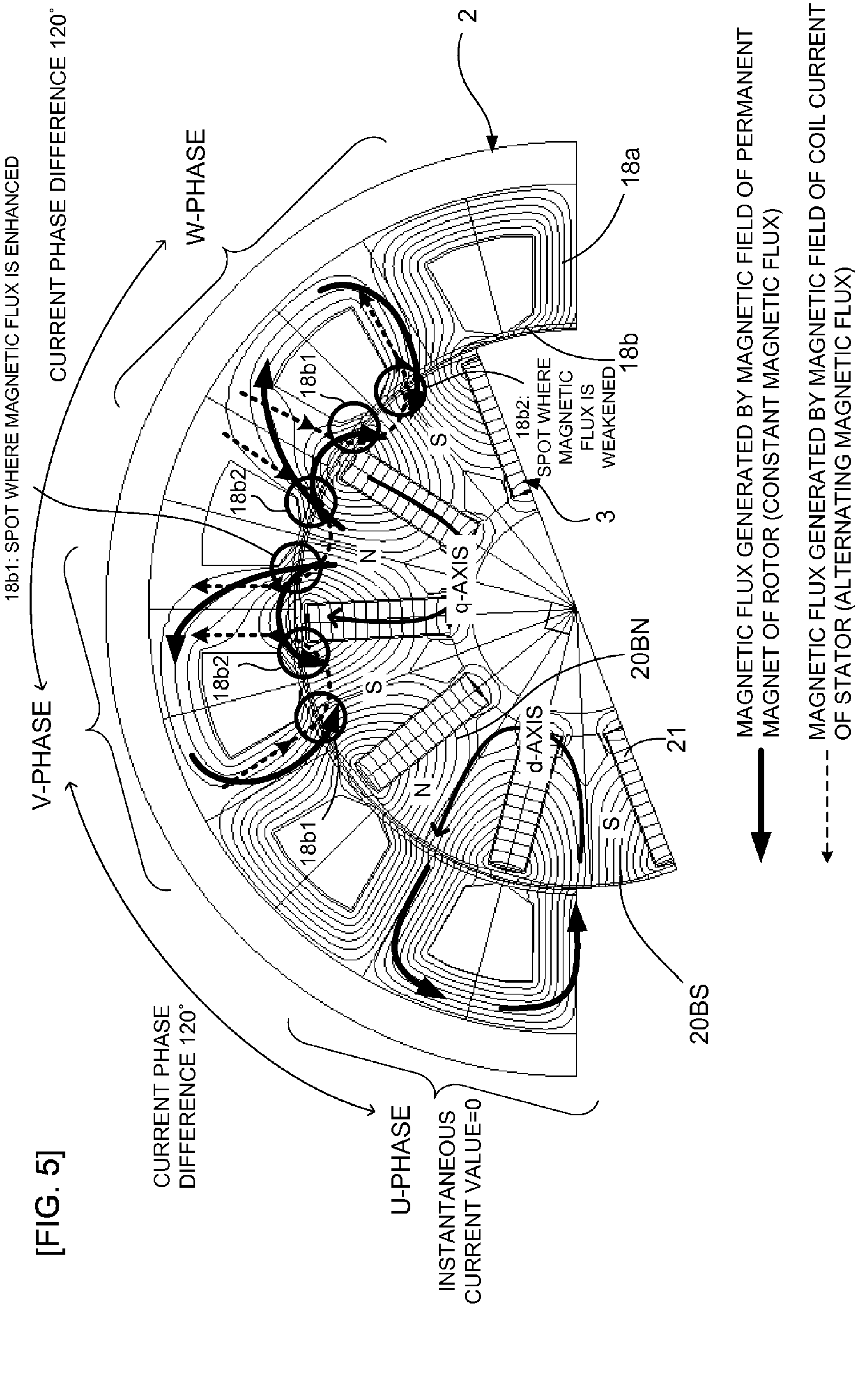
18b1: SPOT WHERE MAGNETIC FLUX IS ENHANCED
CURRENT PHASE DIFFERENCE 120°
W-PHASE
V-PHASE
U-PHASE
INSTANTANEOUS CURRENT VALUE=0
CURRENT PHASE DIFFERENCE 120°
2
18a
18b
18b1
18b2
18b2: SPOT WHERE MAGNETIC FLUX IS WEAKENED
3
N
S
q-AXIS
d-AXIS
20BN
20BS
21
MAGNETIC FLUX GENERATED BY MAGNETIC FIELD OF PERMANENT MAGNET OF ROTOR (CONSTANT MAGNETIC FLUX)
MAGNETIC FLUX GENERATED BY MAGNETIC FIELD OF COIL CURRENT OF STATOR (ALTERNATING MAGNETIC FLUX)

[FIG. 6]

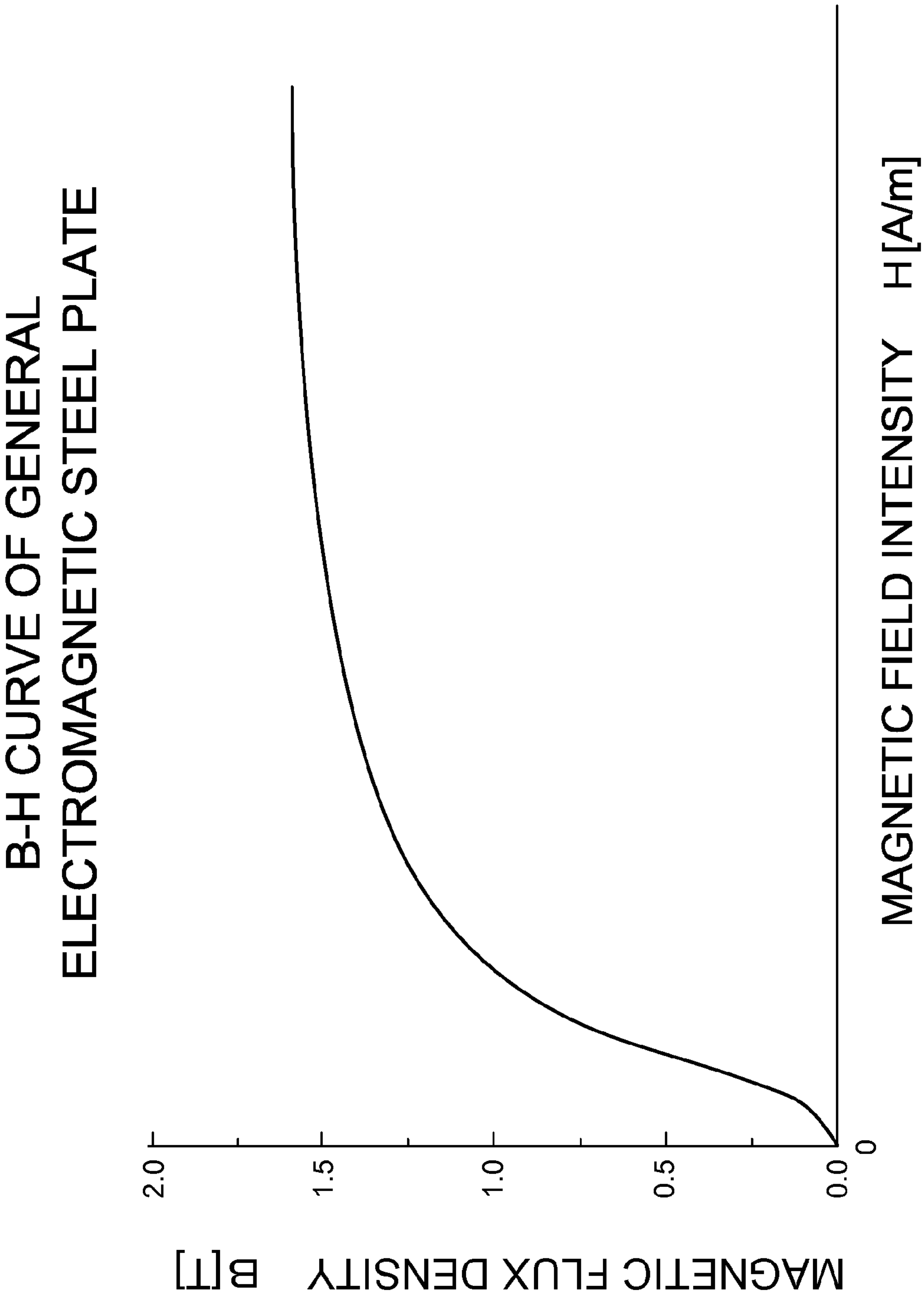
B-H CURVE OF GENERAL
ELECTROMAGNETIC STEEL PLATE
MAGNETIC FLUX DENSITY B[T]
2.0
1.5
1.0
0.5
0.0
0
MAGNETIC FIELD INTENSITY H[A/m]

[FIG. 7A]

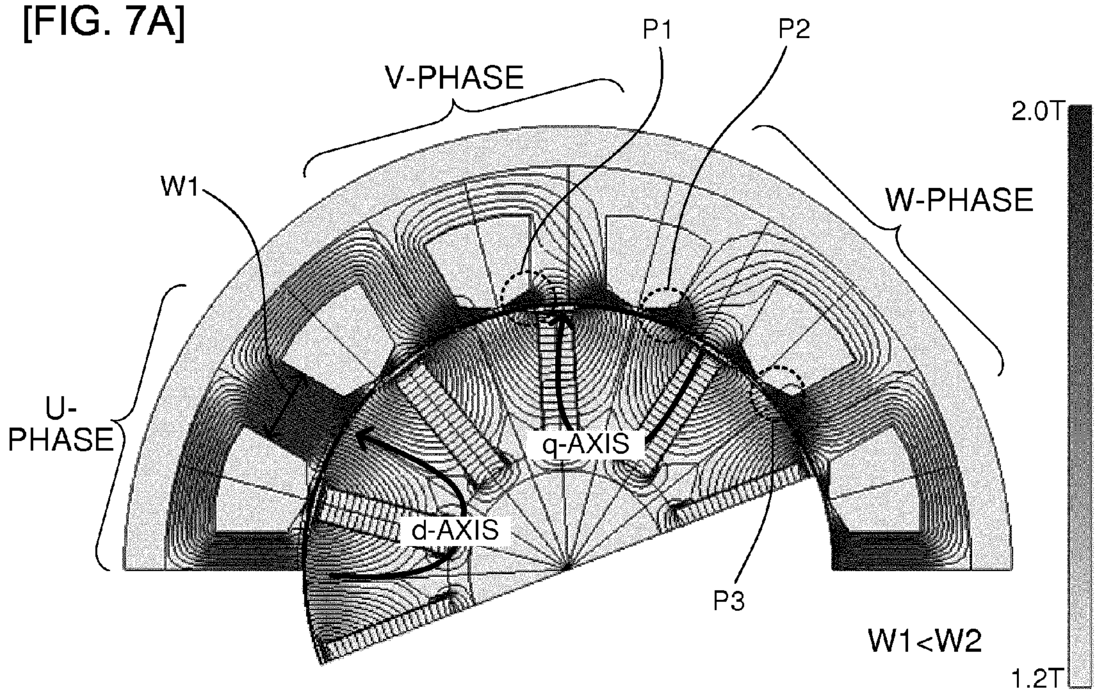


EMBODIMENT: 0% RATED LOAD ALTERNATING CURRENT

[FIG. 7B]

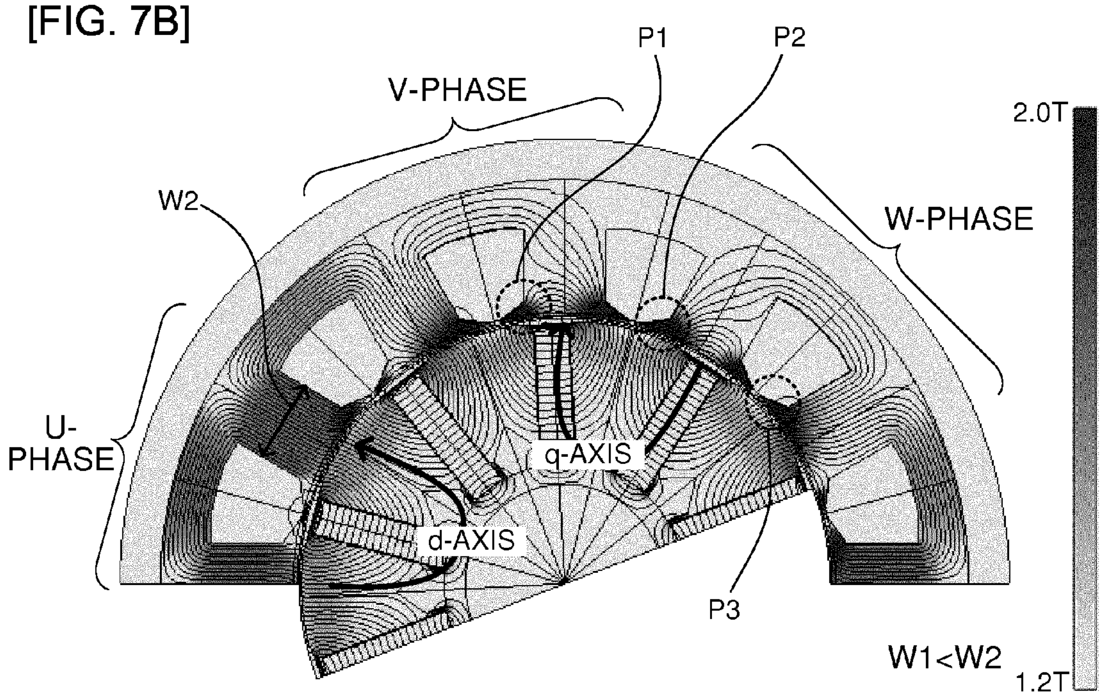


COMPARATIVE EXAMPLE: 0% RATED LOAD ALTERNATING CURRENT

[FIG. 8A]

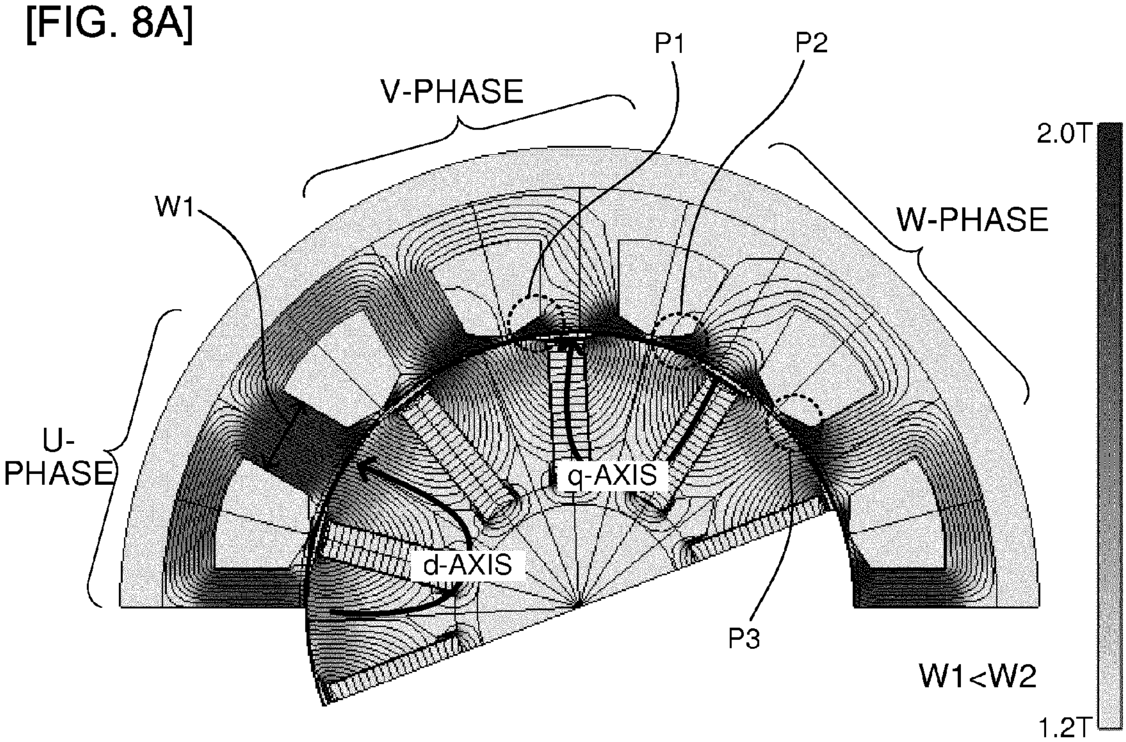


EMBODIMENT: 50% RATED LOAD ALTERNATING CURRENT

[FIG. 8B]

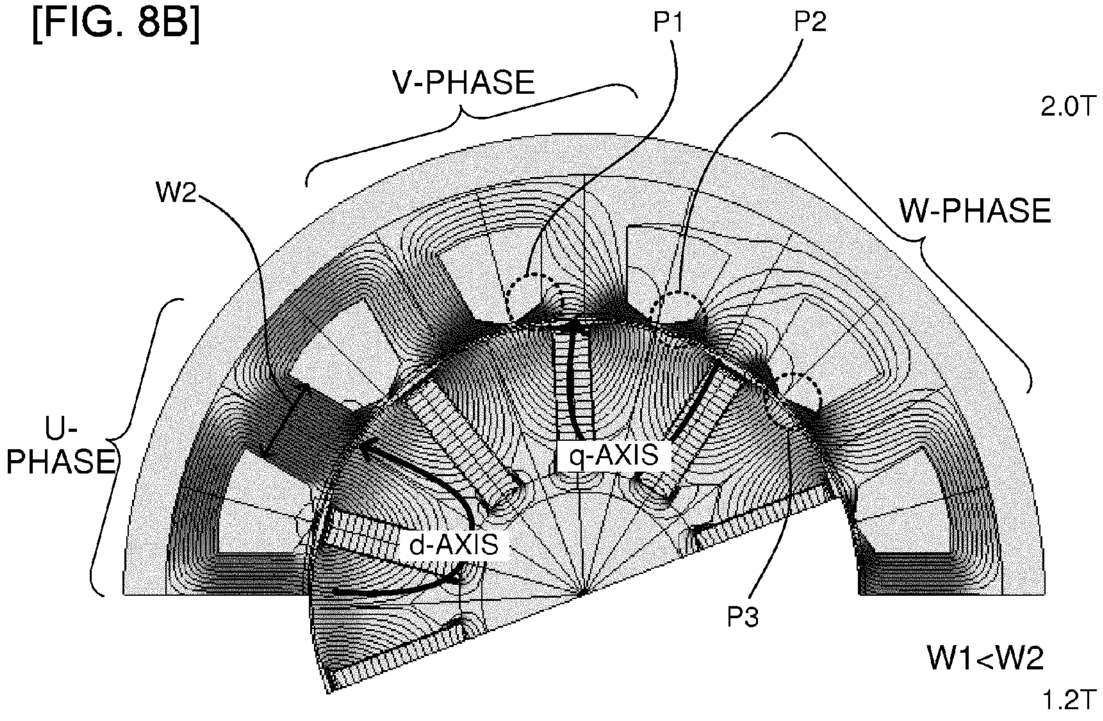


COMPARATIVE EXAMPLE: 50% RATED LOAD ALTERNATING CURRENT

[FIG. 9A]

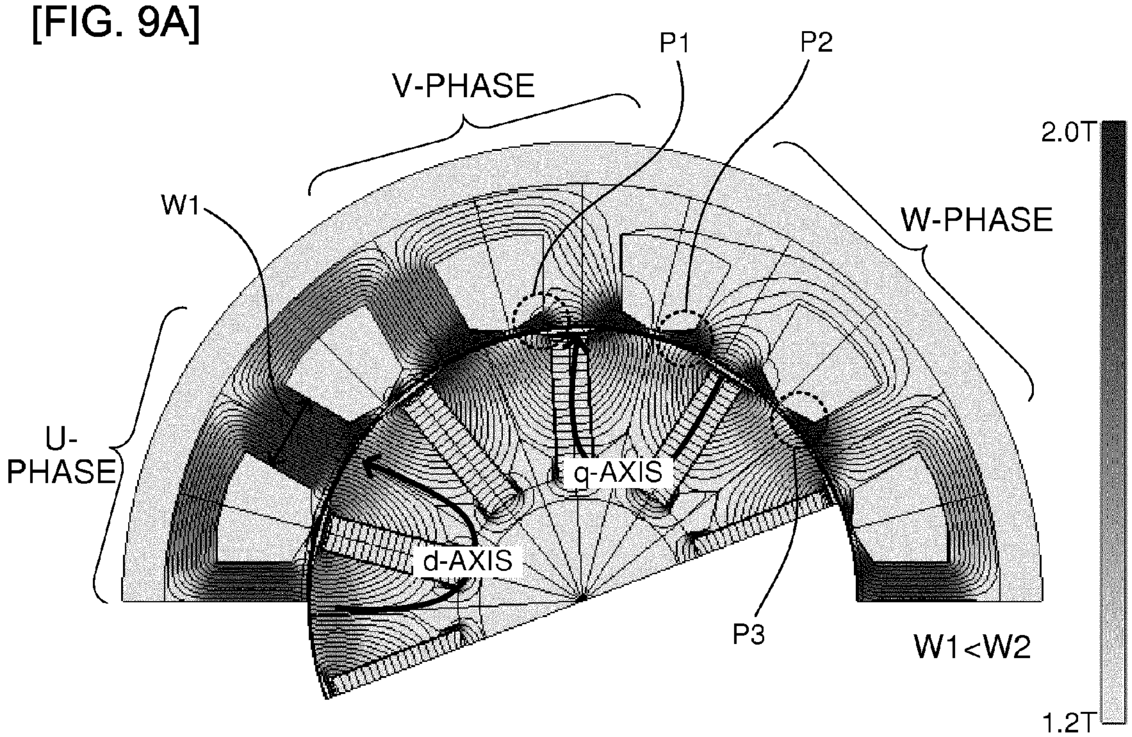


EMBODIMENT: 100% RATED LOAD ALTERNATING CURRENT

[FIG. 9B]

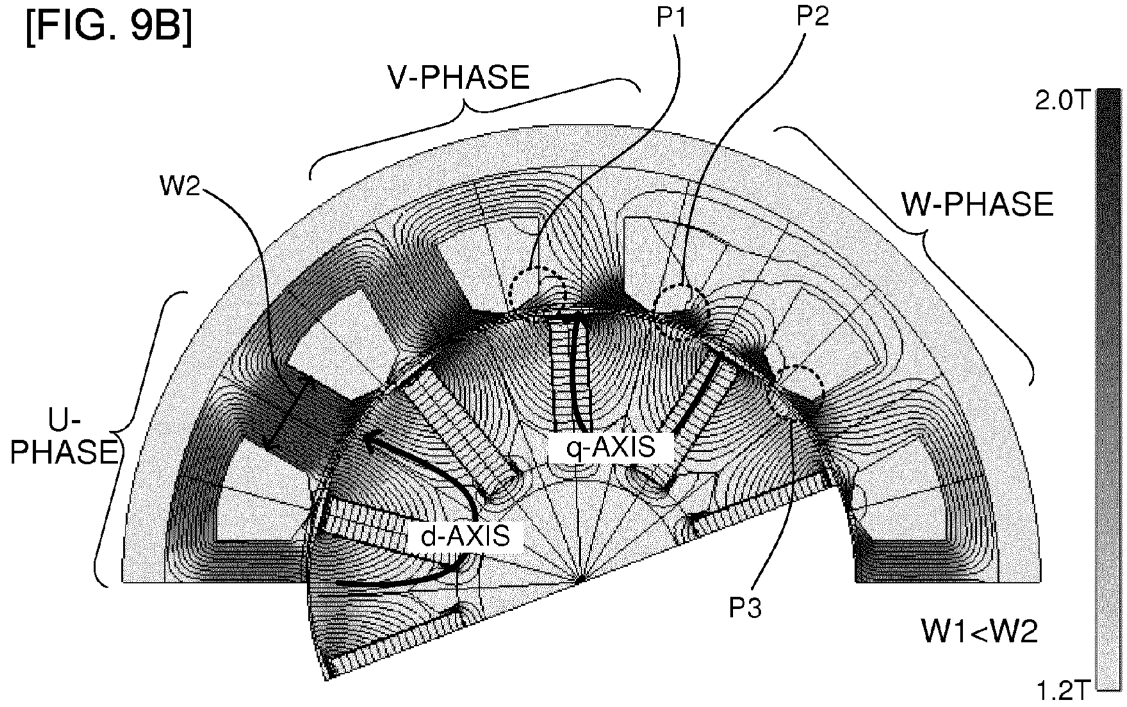


COMPARATIVE EXAMPLE: 100% RATED LOAD ALTERNATING CURRENT

[FIG. 10A]

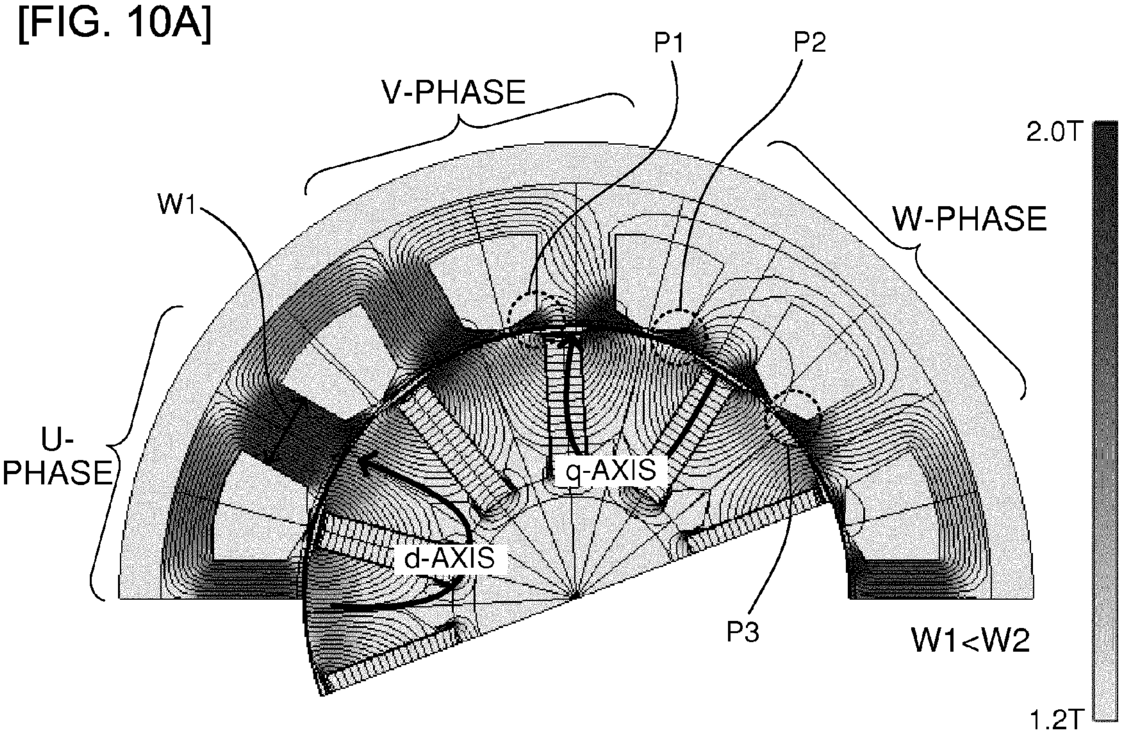


EMBODIMENT: 150% RATED LOAD ALTERNATING CURRENT

[FIG. 10B]

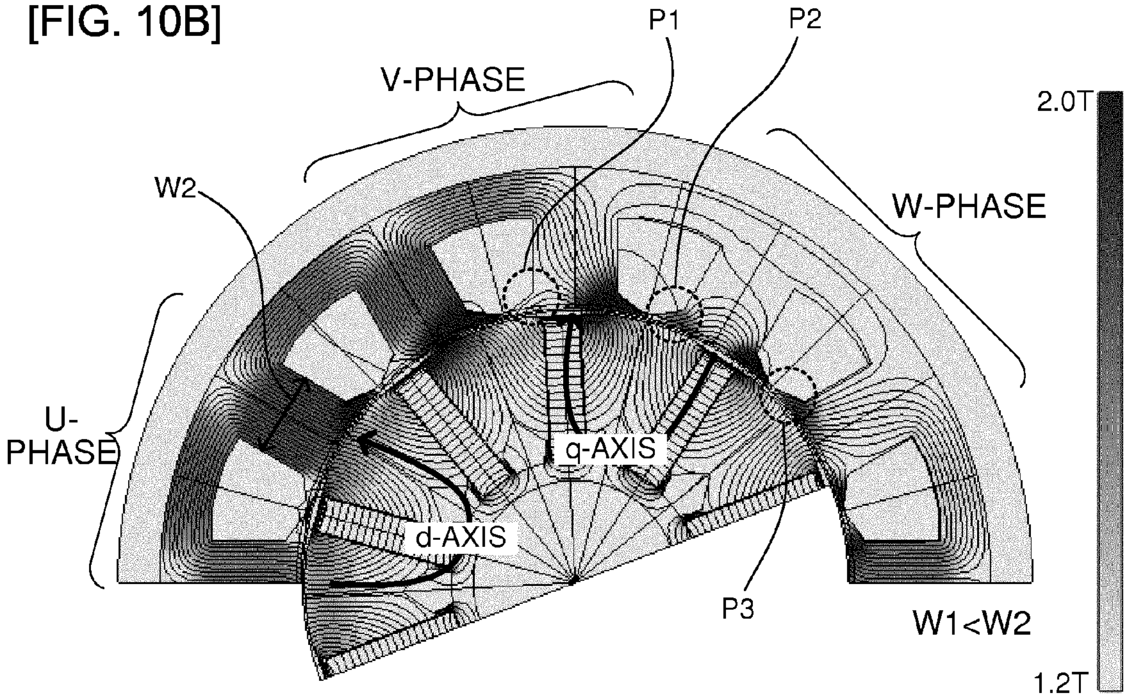


COMPARATIVE EXAMPLE: 150% RATED LOAD ALTERNATING CURRENT

[FIG. 11A]

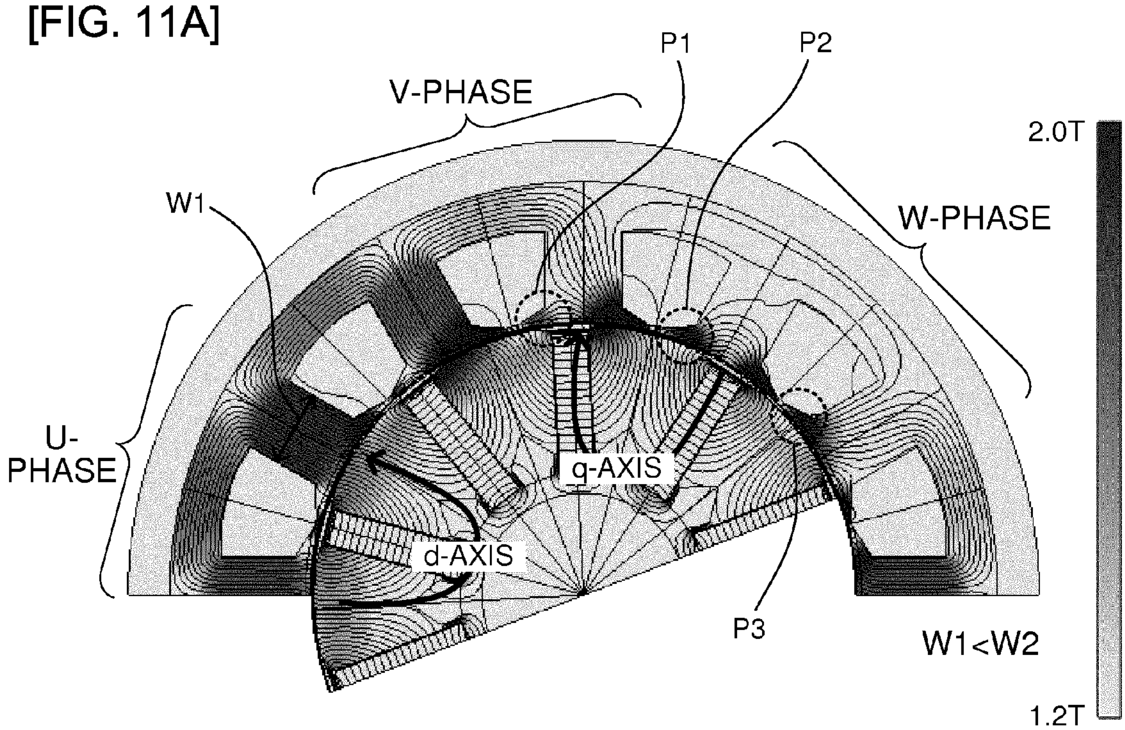


EMBODIMENT: 200% RATED LOAD ALTERNATING CURRENT

[FIG. 11B]

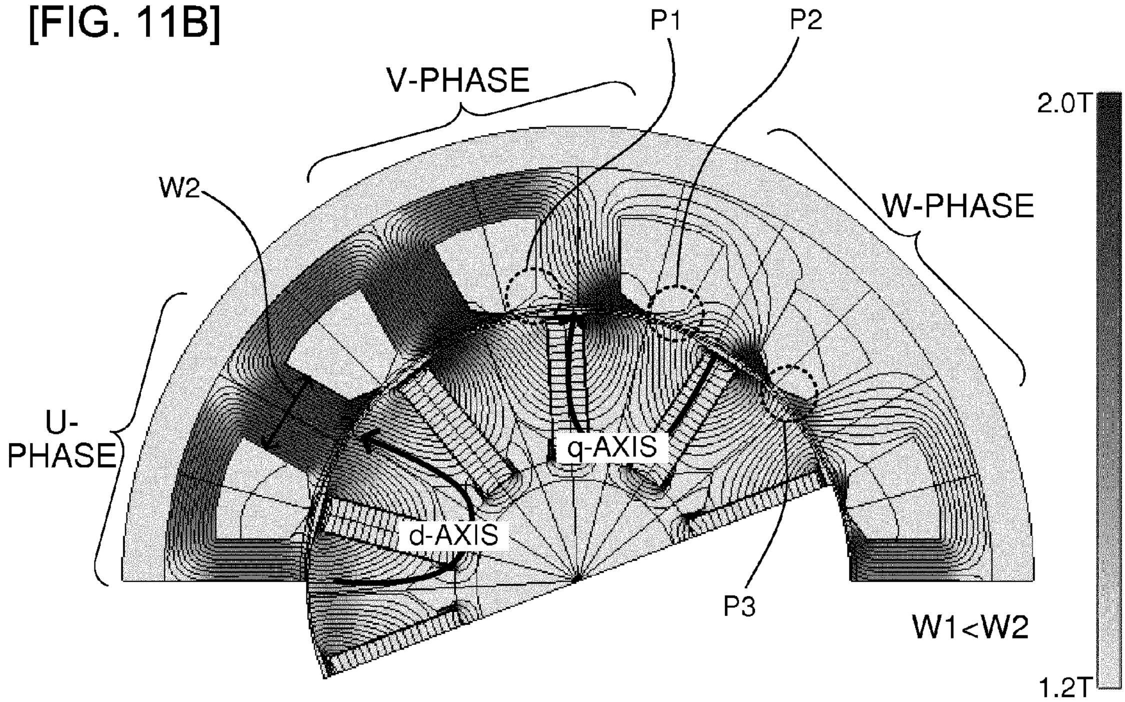


COMPARATIVE EXAMPLE: 200% RATED LOAD ALTERNATING CURRENT

[FIG. 12]

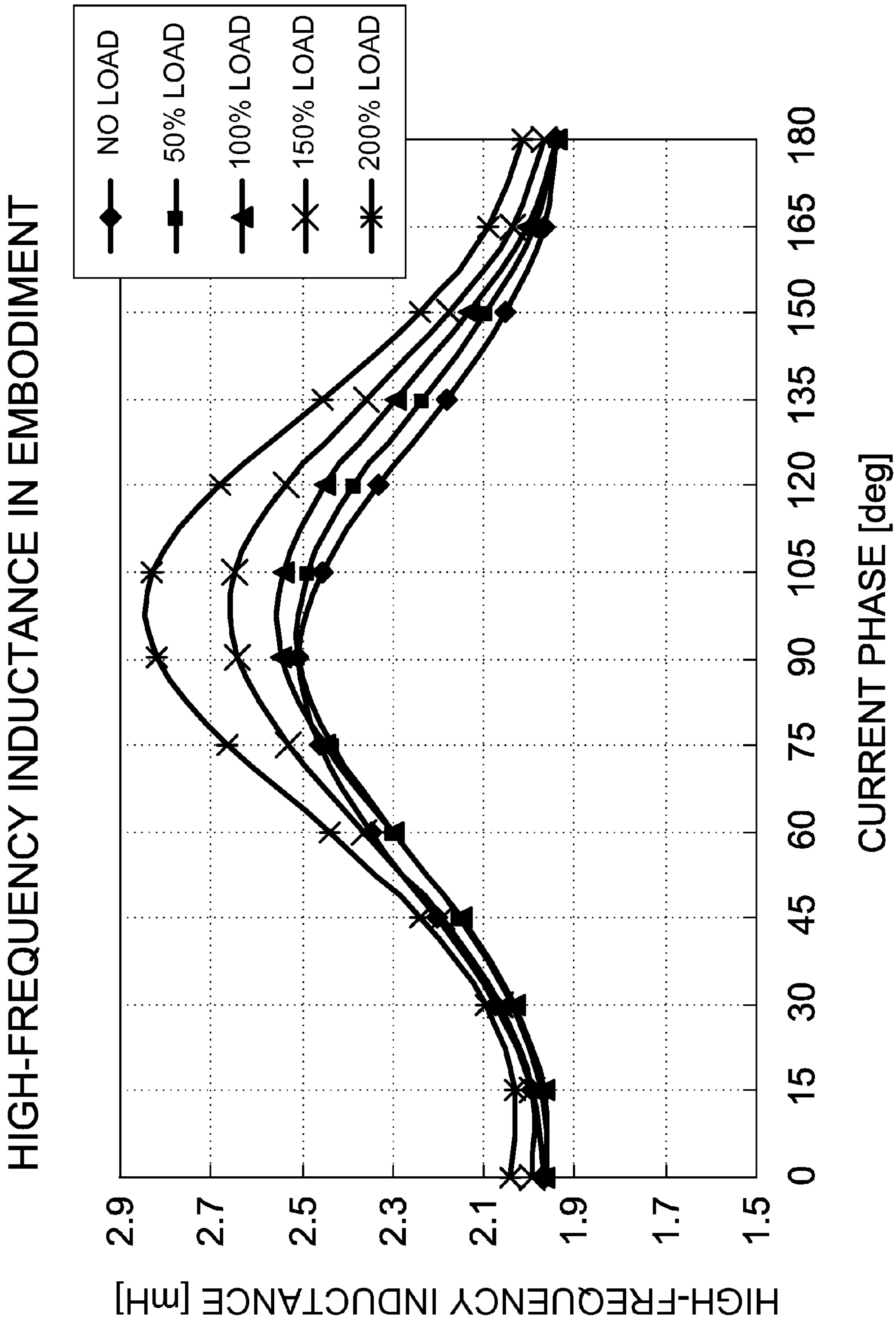
HIGH-FREQUENCY INDUCTANCE IN EMBODIMENT
NO LOAD
50% LOAD
100% LOAD
150% LOAD
200% LOAD
2.9
2.7
2.5
2.3
2.1
1.9
1.7
1.5
HIGH-FREQUENCY INDUCTANCE [mH]
0
15
30
45
60
75
90
105
120
135
150
165
180
CURRENT PHASE [deg]

[FIG. 13]

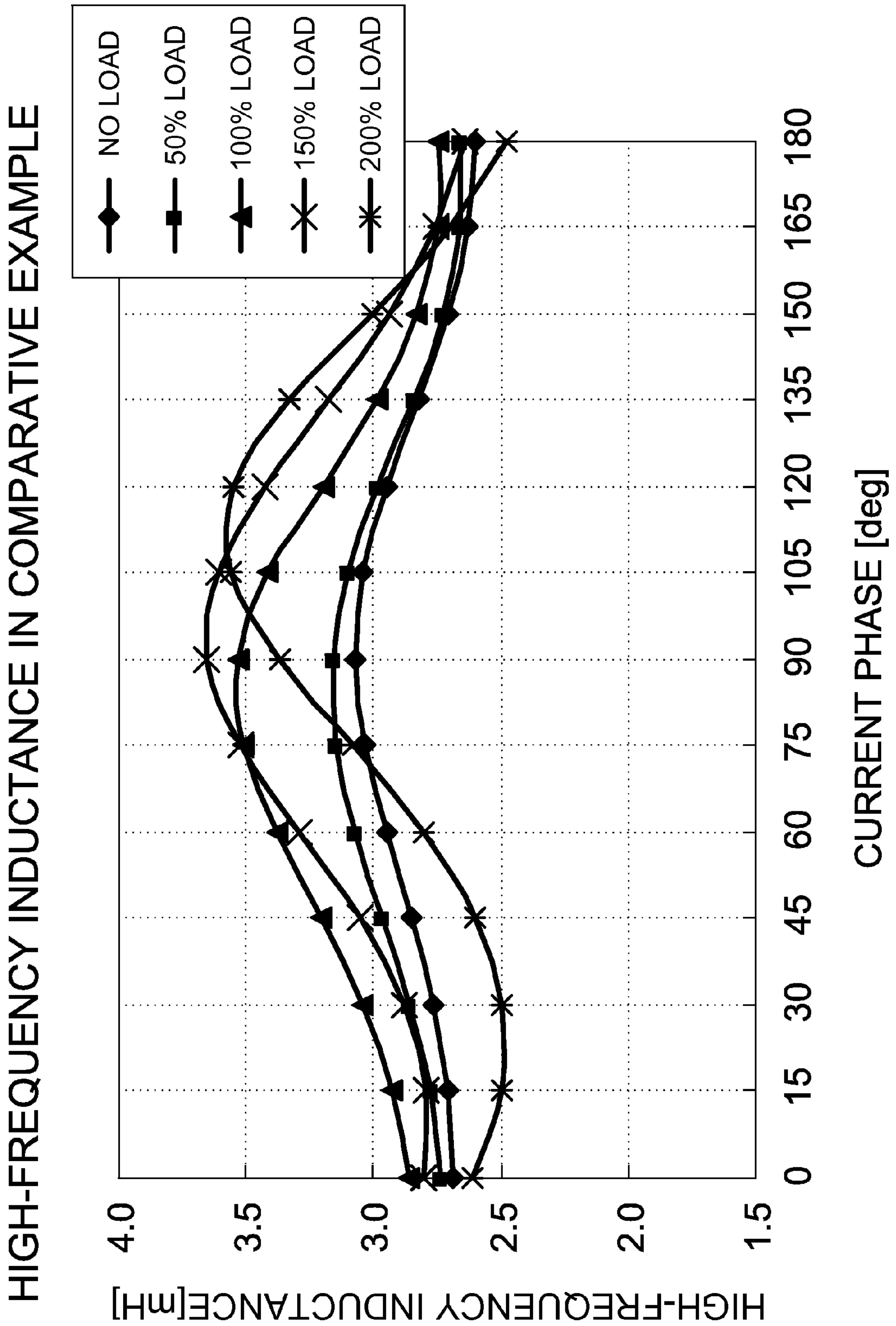
HIGH-FREQUENCY INDUCTANCE IN COMPARATIVE EXAMPLE
HIGH-FREQUENCY INDUCTANCE[mH]
4.0
3.5
3.0
2.5
2.0
1.5
CURRENT PHASE [deg]
0
15
30
45
60
75
90
105
120
135
150
165
180
NO LOAD
50% LOAD
100% LOAD
150% LOAD
200% LOAD

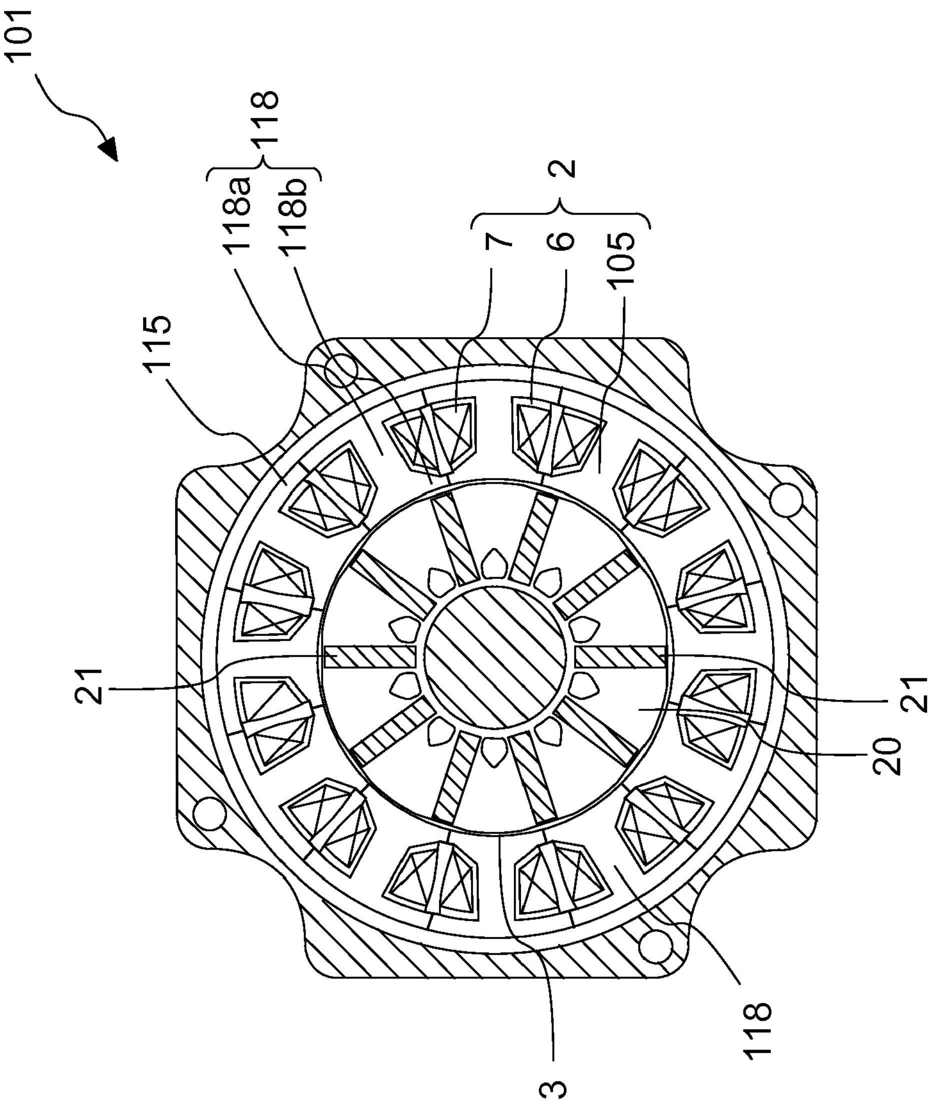


[FIG. 14]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010172080 A